(19) 

Europäisches
Patentamt
European
Patent Office
Office européen
des brevets

(11) **EP 4 697 712 A1**

(12) **EUROPEAN PATENT APPLICATION**
published in accordance with Art. 153(4) EPC

(43) Date of publication:
**18.02.2026 Bulletin 2026/08**

(21) Application number: **23932536.8**

(22) Date of filing: **14.04.2023**

(51) International Patent Classification (IPC):
***H04N 19/176*** (2014.01)

(52) Cooperative Patent Classification (CPC):
**H04N 19/176**

(86) International application number:
**PCT/CN2023/088538**

(87) International publication number:
**WO 2024/212255 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **HUO, Junyan
Dongguan, Guangdong 523860 (CN)**

• **MA, Yanzhuo
Dongguan, Guangdong 523860 (CN)**
• **YANG, Fuzheng
Dongguan, Guangdong 523860 (CN)**
• **QIU, Nengfu
Dongguan, Guangdong 523860 (CN)**
• **DU, Hongqing
Dongguan, Guangdong 523860 (CN)**
• **LI, Ming
Dongguan, Guangdong 523860 (CN)**

(74) Representative: **Grassi, Stefano
Bugnion S.p.A.
Viale Lancetti, 17
20158 Milano (IT)**

(54) **ENCODING/DECODING METHOD, CODE STREAM, ENCODER, DECODER, AND STORAGE
MEDIUM**

(57) Disclosed in embodiments of the present application are an encoding/decoding method, a code stream, an encoder, a decoder, and a storage medium. The method comprises: determining N reference blocks of a current block; determining weighted fusion weight parameters of the N reference blocks; performing weighted fusion on the N reference blocks on the basis of the weighted fusion weight parameters of the N reference blocks, and determining a prediction block of the current block; and determining a prediction residual or a reconstruction block of the current block on the basis of the prediction block of the current block. In this way, in the search process of a reconstruction area, reconstruction block information of different matching templates is fully utilized, instead of simply considering reconstruction block information corresponding to a template having a minimum matching cost, so that the prediction accuracy and the coding and decoding efficiency are improved. Furthermore, matching template information is fully utilized to adaptively allocate weight values to reference blocks, it is considered that the prediction importance of different reconstruction block information is different, and the prediction accuracy and the coding and decoding efficiency are further improved.

```
┌─────────────────────────────────────────────────┐
│ N reference blocks are determined for a current  │── S1601
│ block, N is an integer greater than 1            │
└─────────────────────────────────────────────────┘
                        │
                        ▼
┌─────────────────────────────────────────────────┐
│ The weighted fusion weight parameters of the N   │── S1602
│ reference blocks are determined                  │
└─────────────────────────────────────────────────┘
                        │
                        ▼
┌─────────────────────────────────────────────────┐
│ Weighted fusion is performed on the N reference  │── S1603
│ blocks according to the weighted fusion weight   │
│ parameters of the N reference blocks to          │
│ determine the prediction block for the current   │
│ block                                            │
└─────────────────────────────────────────────────┘
                        │
                        ▼
┌─────────────────────────────────────────────────┐
│ A reconstructed block for the current block is   │── S1604
│ determined according to the prediction block     │
│ for the current block                            │
└─────────────────────────────────────────────────┘
```

**FIG. 16**

**Description**

TECHNICAL FIELD

The present disclosure relates to the field of video coding technologies, and particularly relates to an encoding method, a decoding method, a bitstream, an encoder, a decoder, and a storage medium.

BACKGROUND

Intra Block Copy (IBC) is a block-level coding mode, similar to inter technology, the coding side performs motion search (e.g., block matching) to find the best Block Vector (BV) for each coding block. BV is also known as Motion Vector (MV), and the block vector is a vector pointing from the current block to the reference block.

However, in the actual coding process, the related technology usually directly uses the reconstructed pixel of the best matching reconstructed block as the prediction pixel for the current coding block. However, due to incomplete consideration, it is not the optimal manner in some scenarios. For example, when there is a linear illumination change between the best matching reconstructed block and the current coding block, there will be a large deviation for directly using the reconstructed pixel of the best matching reconstructed block as the prediction pixel for the current coding block, and the optimal prediction effect cannot be implemented, resulting in low prediction accuracy.

SUMMARY

The present disclosure provides an encoding and decoding method, a bitstream, an encoder, a decoder, and a storage medium, which can make full use of reconstructed block information of different matching templates in a process of searching in the reconstructed region, instead of simply considering the reconstructed block information corresponding to a template with the smallest matching cost, such that prediction accuracy and coding efficiency are improved.

The technical solution of the present disclosure may be implemented as follows.

In a first aspect, the embodiments of the present disclosure provide a method for decoding, which is applied to the decoder, and the method includes following operations.

N reference blocks for a current block are determined, and N is an integer greater than 1.

The weighted fusion weight parameters of the N reference blocks are determined.

Weighted fusion is performed on the N reference blocks according to the weighted fusion weight parameters of the N reference blocks to determine the prediction block for the current block.

A reconstructed block for the current block is determined according to the prediction block for the current block.

In a second aspect, the embodiments of the present disclosure provide a method for encoding, which is applied to the encoder, and the method includes following operations.

N reference blocks for a current block are determined, and N is an integer greater than 1.

The weighted fusion weight parameters of the N reference blocks are determined.

Weighted fusion is performed on the N reference blocks according to the weighted fusion weight parameters of the N reference blocks to determine the prediction block for the current block.

A prediction residual for the current block is determined according to the prediction block for the current block.

In a third aspect, the embodiments of the present disclosure provide a bitstream. The bitstream is generated by performing bit encoding according to information to be encoded. The information to be encoded includes at least one of:

a number of coefficients of a target filter, a shape of the target filter, a value of a first syntax element or a value of a second syntax element; wherein the first syntax element is used for indicating a value of N, and the second syntax element is used for indicating whether a fusion prediction mode is used for a current block.

In a fourth aspect, the embodiments of the present disclosure provide an encoder, and the encoder includes: a first determination unit and a first prediction unit.

The first determination unit is configured to determine N reference blocks for a current block, and N is an integer greater than 1.

The first determination unit is configured to determine weighted fusion weight parameters of the N reference blocks.

The first prediction unit is configured to perform weighted fusion on the N reference blocks according to the weighted fusion weight parameters of the N reference blocks to determine a prediction block for the current block.

The first determination unit is configured to determine a prediction residual for the current block according to the prediction block for the current block.

In a fifth aspect, the embodiments of the present disclosure provide an encoder, and the encoder includes: a first memory and a first processor.

The first memory is configured to store a computer program capable of running on the first processor.

The first processor is configured to, when running the computer program, perform the method according to the second aspect.

In a sixth aspect, the embodiments of the present disclosure provide a decoder, and the decoder includes: a second determination unit and a second prediction unit.

The second determination unit is configured to determine N reference blocks for a current block, and N is an integer greater than 1.

The second determination unit is further configured to determine weighted fusion weight parameters of the N reference blocks.

The second prediction unit is configured to perform weighted fusion on the N reference blocks according to the weighted fusion weight parameters of the N reference blocks to determine a prediction block for the current block.

The second determination unit is further configured to determine a reconstructed block for the current block according to the prediction block for the current block.

In a seventh aspect, the embodiments of the present disclosure provide a decoder, the decoder includes: a second memory and a second processor.

The second memory is configured to store a computer program capable of running on the second processor.

The second processor is configured to, when running the computer program, perform the method according to the first aspect.

In an eighth aspect, the embodiments of the present disclosure provide a computer readable storage medium stored thereon a computer program which, when executed, implement the method of the first aspect or implement the method of the second aspect.

The embodiments of the present disclosure provide an encoding and decoding method, a bitstream, an encoder, a decoder, and a storage medium. The method includes following operations. N reference blocks of a current block are determined, herein N is an integer greater than 1. Weighted fusion weight parameters of the N reference blocks are determined. Weighted fusion is performed on the N reference blocks according to the weighted fusion weight parameters of the N reference blocks to determine a prediction block for the current block. A prediction residual or a reconstructed block for the current block is determined according to the prediction block for the current block. In this way, in the process of searching in the reconstructed region, the reconstructed block information of different matching templates is fully utilized, instead of simply considering the reconstructed block information corresponding to the template with the smallest matching cost, such that the prediction accuracy and the coding efficiency are improved.

Furthermore, the matching template information is fully utilized to adaptively allocate weight values to the reference blocks, and the different importance of the information of different reconstructed blocks to the prediction for the current block is considered, so as to further improve the prediction accuracy and coding efficiency.

BRIEF DESCRIPTION OF THE DRAWINGS

FIG. 1 is a schematic diagram of a prediction process for an IBC technology.
FIG. 2 is a schematic diagram of a prediction process based on an IBC technology.
FIG. 3 is a schematic diagram of a template type.
FIG. 4 is a schematic diagram of the location of a source of a spatial adjacent coding unit.
FIG. 5 is a schematic diagram of the location of a BV candidate.
FIG. 6 is a schematic diagram of a template position of a reference block and a template position of a current block.
FIG. 7 is a schematic diagram of a clustering process for a BVP candidate.
FIG. 8A is a first schematic diagram of a search position for a diamond template.
FIG. 8B is a second schematic diagram of a search position for a diamond template.
FIG. 9 is a second schematic diagram of a prediction process for a BV.
FIG. 10 is a first schematic diagram of a reference region for an IBC.
FIG. 11 is a second schematic diagram of a reference region for an IBC.
FIG. 12 is a third schematic diagram of a reference region for an IBC.
FIG. 13 is a schematic diagram of a search process based on template matching.
FIG. 14A is a schematic block diagram of an encoder according to an embodiment of the present disclosure.
FIG. 14B is a schematic block diagram of a decoder according to an embodiment of the present disclosure.
FIG. 15 is a schematic diagram of a network architecture of a codec system according to an embodiment of the present disclosure.
FIG. 16 is a flow schematic diagram of a method for decoding according to an embodiment of the present disclosure.
FIG. 17 is a flow schematic diagram of a method for determining a reference block according to an embodiment of the present disclosure.

FIG. 18 is a schematic diagram of an IBC fusion process according to an embodiment of the present disclosure.

FIG. 19A is a schematic compositional diagram of a filter coefficient according to an embodiment of the present disclosure.

FIG. 19B is a schematic compositional diagram of a prediction pixel according to an embodiment of the present disclosure.

FIG. 20 is a flow schematic diagram of a method for encoding according to an embodiment of the present disclosure.

FIG. 21 is a schematic diagram of a composition structure of an encoder according to an embodiment of the present disclosure.

FIG. 22 is a structural schematic diagram of a specific hardware of an encoder according to an embodiment of the present disclosure.

FIG. 23 is a schematic diagram of a composition structure of a decoder according to an embodiment of the present disclosure.

FIG. 24 is a structural schematic diagram of a specific hardware of an encoder according to an embodiment of the present disclosure.

FIG. 25 is a schematic diagram of a composition structure of an encoding and decoding system according to an embodiment of the present disclosure.


DETAILED DESCRIPTION

**In** order to enable a more detailed understanding of the features and technical content of the embodiments of the present disclosure, the implementation of the embodiments of the present disclosure will be described in detail below in conjunction with the accompanying drawings, which are provided for illustration only and are not intended to limit the embodiments of the present disclosure.

Unless otherwise defined, all technical and scientific terms used herein have the same meanings as are commonly understood by those skilled in the art of the present disclosure. Terms used herein are for the purpose of describing the embodiments of the disclosure only and are not intended to limit the present disclosure.

In the following description, reference is made to "some embodiments" that describe a subset of all possible embodiments. However, it is to be understood that "some embodiments" may be the same subset or different subsets of all possible embodiments and may be combined with each other without conflict. It is further to be pointed out that, the terms "first/second/third" referred in embodiments of the present disclosure are merely used to distinguish similar objects, and do not represent a particular order for the objects. It is to be understood that "first/second/third" may be interchanged in a particular order or sequence where allowed, such that the embodiments of the disclosure described herein may be implemented in an order other than that illustrated or described herein.

Before further describing the embodiments of the present disclosure in detail, the terms and terminologies related to the embodiments of the present disclosure will be described first, and the terms and terminologies related to the embodiments of the present disclosure are applicable to the following explanations:

Coding block (CB);
Block matching (BM);
Coding unit (CU);
Block vector (BV);
Sum of Absolute Difference (SAD);
Sum of Absolute Transformed Difference (SATD);
Mean Square Error (MSE);
Sum of Squared Differences (SSD);
Mean Absolute Deviation (MAD);
Mean Square Differences (MSD);
Rate-Distortion Optimization (RDO);
Normalized Correlation Coefficient (NCC);
Peak Signal to Noise Ratio (PSNR);
H.266/Versatile Video Coding (VVC);
VVC Test Model (VTM);
Intra Template Matching Prediction (Intra TMP);
Enhanced Compression Model (ECM).

It is to be understood that in a video picture, a first colour component, a second colour component, and a third colour component are generally used to represent a coding block. The three colour components are one luma component, one blue chroma component, and one red chroma component, respectively. Specifically, the luma component is usually represented by the symbol Y, the blue chroma component is usually represented by the symbol Cb or U, and the red chroma component is usually represented by the symbol Cr or V. In this way, the video picture may be represented in the YCbCr format or in the YUV format. It is also to be understood that IBC is an extended tool of VVC for screen content coding, which significantly improves the encoding efficiency of screen content sequence. IBC may also be understood as a special intra prediction mode, similar to inter prediction mode, the coding side performs motion search (e.g., block matching) to find the best Block Vector (BV) for each coding block. BV is also known as Motion Vector (MV), and the block vector is a vector pointing from the current block to the reference block. The difference between IBC technology and inter technology is that the optimal block vector of IBC is obtained by searching in the reconstructed region of the picture in which the current coding block is located (i.e. the current coding picture), while the inter motion vector is obtained by searching in a temporally adjacent reference picture of the current coding picture.

IBC technology is used as an important tool for screen video coding in H.265/HEVC SCC, H.266/VVC, AV1, AVS3, EVC and other coding standards. In the exploration model ECM for the next generation coding standard of H.266/VVC, IBC technology remains to be used as a tool for screen video coding, and this tool is expanded into a toolset that combines multiple modes. Meanwhile, it is also introduced into the field of ordinary natural video coding, and becomes a more versatile video coding tool.

Intra TMP is a special intra prediction mode. Both the encoder and decoder use the template (T) of the coding block to search for the matching template (T_BEST) with the lowest cost within the predefined search range of the current picture according to the preset cost function. The offset of the best matching template relative to the current coding block template is the Best Block Vector (BV_BEST), and then the corresponding reconstructed block (Ref Block) corresponding to the matching template is used as the prediction block for the current coding block (Cur Block). The template of the coding block is usually selected from a reconstructed region adjacent to the current coding block.

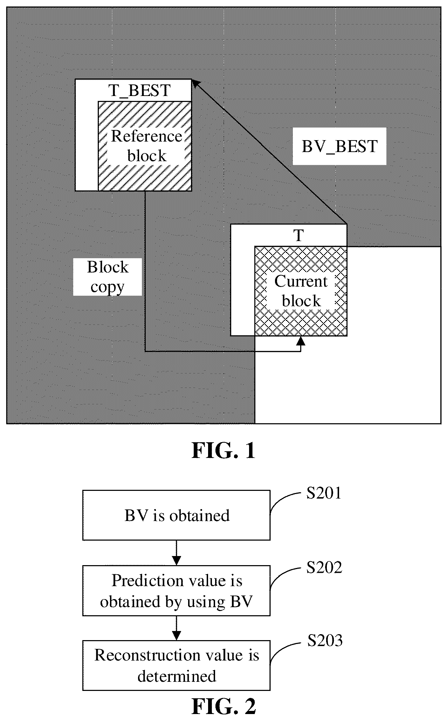

Exemplarily, taking an adjacent reconstructed region of the current block as an example, as illustrated in FIG. 1, a region filled with a dark color represents the reconstructed region, a block filled with a grid is a current block, and an adjacent region of the current block is a first template (T). The block filled with a diagonal line is a reference block, and the adjacent region of the reference block is a second template (i.e., a "reference template" or a "matching template", T_BEST). The offset of the second template with respect to the first template is the best block vector (BV_BEST), and at this case, the reference block may be copied as the prediction block for the current block.

In an embodiment of the present disclosure, the preset cost function may be an SAD, an SATD, an MSE, an SSD, an MAD, an MSD, an RDO, an NCC, etc., which is not specifically limited herein.

Exemplarily, taking the SAD as an example, the cost function at this case is as follows:

$$\mathrm{SAD}(T_i) = \sum_{m=0}^{M-1} |T_{i,m} - T_m|, m = 0,1,\ldots,M-1 \qquad (1)$$

where $T_i$ is the template in the search process, and M denotes the number of pixels in the template.

The prediction process for the Intra TMP technology in the related art is introduced in detail below.

Input of IntraTMP technique: the position of current block (xTbCmp, yTbCmp), the width of current block nTbW, and the height of the current block nTbH.

Output of the IntraTMP technique: the prediction value of the current block predSamples[x][y], where x = 0.. nTbW - 1, y = 0.. nTbH - 1.

Specifically, the prediction process of IntraTMP technology may be divided into four steps: the current template type is determined, the reconstructed pixel of the current template is acquired, the block vector is determined within a predefined search range, and the prediction value is generated. Thus, the prediction value for the current block may be obtained through the above process. It is to be noted that the Intra TMP technology may be used to predict the luma component or the chroma component, which is not specifically limited herein.

Referring FIG. 2, FIG. 2 illustrates a schematic diagram of a prediction process based on an IBC technology. As shown in FIG. 2, the basic process of reconstructing pixel values in IBC mode includes steps S201 to S203.

At S201, BV is obtained.

In a practical implementation, there may be multiple manners for obtaining BV. Therefore, the bitstream may contain the mode information for the manner of obtaining BV and corresponding parameter information. For example, if the IBC merge mode is obtained in the syntax element, the decoder constructs a merge list, parses the merge list option index, and then obtains the specific information of BV from the corresponding option in the merge list according to the index. For another example, for the ordinary IBC mode, the decoder obtains specific information of the BV by parsing the value of the syntax element, which describes the BV or the BV prediction difference value, in the bitstream.

At S202, the prediction value is obtained by using the BV.

In an actual implementation, the corresponding region pointed by the BV is usually copied to obtain the prediction value for the current block.

At S203, the reconstruction value is determined.

In an actual implementation, if there is a prediction residual, it is necessary to parse the bitstream to obtain the prediction residual, and then the operation such as summing is performed on the prediction residual and the prediction value to obtain the final reconstruction value.

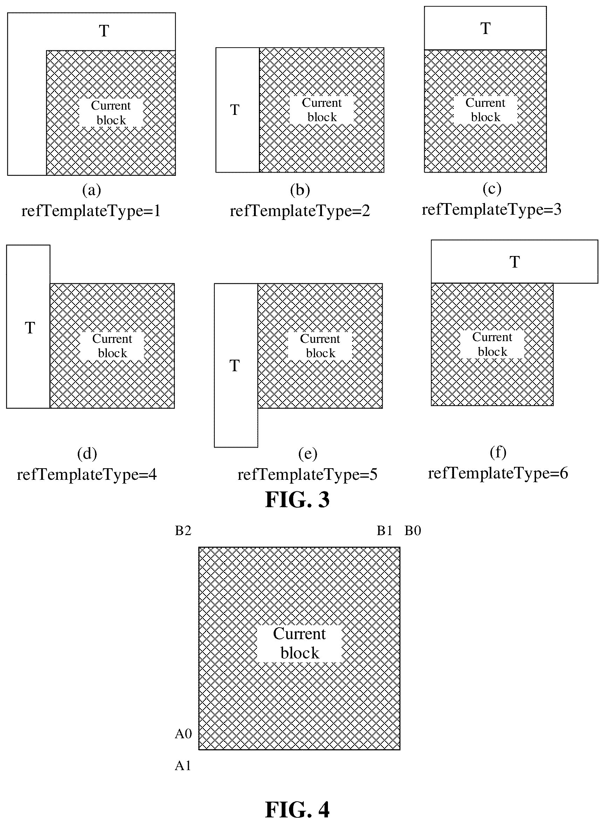

In an embodiment of the present disclosure, there are many aspects related to the use of template and the template matching cost, which will be described uniformly herein. The template type may be represented by refTemplateType, and the template type includes, but is not limited to, the six types in FIG. 3. FIG. 3 illustrates a schematic diagram of a template type. As shown in FIG. 3, a block filled with the grid is a current block, and an adjacent region of the current block is a template T. Six template types are illustrated herein, they may be valid simultaneously, and are used by indicating by the syntax element, or may be used individually (for example, only type (a) in FIG. 3 is used).

Exemplarily, the six template types are as follows.

When the top-left reference pixels, the top reference pixels, and the left reference pixels are all available, a value of refTemplateType is 1, and the template shape is shown in (a) of FIG. 3.

When only the left reference pixels are available, the value of refTemplateType is 2, and the template shape is shown in (b) in FIG. 3.

When only the top reference pixels are available, the value of refTemplateType is 3, and the template shape is shown in (c) of FIG. 3.

When only the left reference pixels and the top-left reference pixels are available, the value of refTemplateType is 4, and the template shape is shown in (d) of FIG. 3.

When only the left reference pixels and the lower-left reference pixels are available, the value of refTemplateType is 5, and the template shape is shown in (e) in FIG. 3.

When only the top reference pixels and the top-right reference pixels are available, the value of refTemplateType is 6, and the template shape is shown in (f) in FIG. 3.

It is to be noted that the template may be formed by the reconstructed pixels in one or more regions of the upper side, the upper right side, the left side, the lower left side, and the upper left side of the current block. Further, the template size may be preset. For example, when the left template is acquired, the template width templateW_size may be set to 4, and when the upper template is acquired, the template height templateH_size may be set to 4.

It is further to be noted that it may be determined which part of the reconstructed pixels are obtained according to the value of refTemplateType. For example, when the value of refTemplateType is 1, the reconstructed pixels at the left side, the upper left side, and the upper side of the current block are obtained. Alternatively, when the value of refTemplateType is 2, only the reconstructed pixels at the left four columns of the current block are obtained. Alternatively, when the value of refTemplateType is 3, only the reconstructed pixels at the upper four rows of the current block are obtained.

Further examples of the process of reconstructing pixel value in IBC mode are given below.

At S1, BV is derived.

(1) Luma

Input: luma position (xCb, yCb), which specifies the sample at the upper left corner of the current coding block relative to the luma sample at the upper left corner of the current picture, a variable cbWidth, which specifies the width of the current coding block in the luma sample, and a variable cbHeight, which specifies the height of the current coding block in the luma sample.

Output: block vector of luma (Block Vector Luma, bvL)

IBC mode may be roughly classified into two types of modes: IBC merge and IBC Adaptive Block Vector Prediction (ABVP) (similar to the merge and Adaptive Motion Vector Prediction (AMVP) modes of the inter mode in VVC). The process of obtaining BV may be regarded as the following three steps.

1. A list of IBC block vector candidates bvCandList needs to be constructed when bvL is derived.
2. The selected candidate in the list is determined according to the bitstream.
3. The final BV is determined according to the candidate.

The specific information stored in the IBC candidate includes at least one of following information:

i. prediction direction (L0 or L1, general L0 by default)
ii. BV information (horizontal component, vertical component)
iii. reference frame (current picture by default)
iv. flip type (e.g.: no flip, horizontal flip, and vertical flip)
v. whether to use LIC (linear model)

The following describes step 1. the establishment process for the candidate list. Taking the establishment process for the IBC merge list as an example, the basic establishment process for the IBC ABVP list is consistent with IBC merge, but the maximum numbers of candidates of the two are different (for example, the length of IBC merge candidate list is defined to be 6, and the length of IBC ABVP candidate list is 2).

Step 1: the airspace candidate is derived.

When the usage condition is satisfied (e.g., the size condition IsGt4by4 is equal to TRUE: the variable IsGt4by4 is TRUE when the luma width multiplied by the height is greater than 16), the derivation process, as specified in the decoding specification, for the spatial block vector candidate from the adjacent coding unit is invoked by using the position of luma coding block (xCb, yCb), the width and height of luma coding block (cbWidth and cbHeight) as the input, and the output is an availability flag such as availableFlagA1 and availableFlagB1, and the block vector bvA1 and bvB1.

The availability detection for each candidate is as follows. The following conditions are determined, and if all the conditions are met, the candidate is available:

whether the offset position obtained by adding BVP to the current block position does not exceed the picture boundary;
whether the block position pointed by the current block position plus the BVP does not cover the current block;
whether the offset position obtained by adding BVP to the current block position does not exceed the IBC available region; and
whether the block position pointed by the current block position plus the BVP has been reconstructed.

FIG. 4 is a schematic diagram of the location of a source of a spatial adjacent coding unit according to the embodiment of the present disclosure. The positions of the adjacent blocks, in which A1, B1 and the like are located, related to the current coding block are illustrated in FIG. 4, and the traversal order may be $A_1$-> $B_1$-> $B_0$-> $A_0$-> $B_2$.

Step 2: the airspace candidate is added to the candidate list.

When the usage condition is satisfied (e.g. the size condition IsGt4by4 equals to TRUE), the list of block vector candidates bvCandList is constructed as follows:

$$i = 0$$

$$\text{if( availableFlagA1 )}$$

$$\text{bvCandList [ i++ ] = bvA1}$$

$$\text{if( availableFlagB1 )}$$

$$\text{bvCandList [ i++ ] = bvB1}$$

$$\ldots$$

Step 3: the number of valid items in the candidate list is checked.

The derivation process for the variable numCurrCand (the number of candidates that have been obtained currently) is as follows.

If the usage condition is satisfied (for example, the size condition IsGt4by4 is equal to TRUE), numCurrCand is set to be equal to the number of candidates in bvCandList; otherwise numCurrCand is set to be 0.

Step 4: If the candidate list does not reach the specified number of items (for example, the number of items specified by IBC merge mode is 6, and the number of items specified by IBC ABVP mode is 2), the steps of derivation, availability detection and addition for the historical candidates are continued.

When numCurrCand is less than MaxNumIbcMergeCand (the maximum number of candidates in the IBC merge mode) and NumHmvpIbcCand (the maximum number of candidates for the historical optimal block vector (Hmvp) in the IBC mode) is greater than 0, bvCandList and numCurrCand are taken as input and the modified bvCandList and numCurrCand are taken as output, and the derivation process for IBC block vector candidates based on history specified in the decoding specification is invoked.

Step 5: the number of valid items in the candidate list is continuously checked and other available candidates (such as pairwise average candidates, zero-value BV candidate, etc.) are added until the specified number of items is reached.

Exemplarily, the pairwise average candidates may be constructed by utilizing the first and the second candidates:

$$mvAvgLX = (mvCand0LX + mvCand1LX + 1) \gg 1$$

The zero value BV may be a set directly.

bvCandList [numCurrCand] [0] is set to be equal to 0. (Horizontal component of BV)
bvCandList [numCurrCand] [1] is set to be equal to 0. (Vertical component of BV)

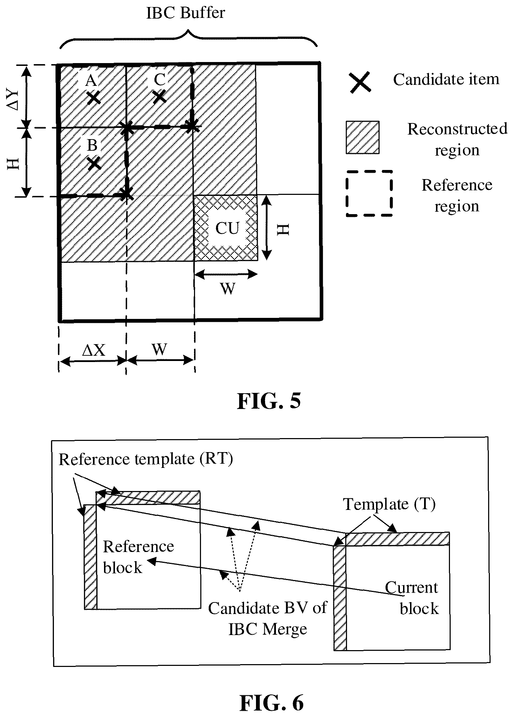

Alternatively, a set of BVP candidates located in the IBC reference region are used as the candidates that may be added. The coordinates of a set of BVP candidates are determined by the width and height of the current block and the parameters ΔX and ΔY, as illustrated in FIG. 5.

For each additional item, numCurrCand increases by 1.

In this way, the basic list of block vector candidates bvCandList is constructed.

On the basis of this list, in IBC merge mode, the order of the list may be sorted by using templates, the order of candidate list is adjusted, which may make full use of the high correlation of space, reduce the transmission of coded bits, and effectively improve the coding efficiency. For example, for the IBC merge mode, after the intermediate candidate list is constructed according to the above list construction method (note that the length of the intermediate candidate list may be greater than or equal to the maximum number of candidates for the IBC merge mode), all candidates in the list are reordered by using the templates, and the top N (e.g., N = 6) candidates in the sorted list are selected according to the template matching cost. The specific process is as follows: the SAD of the template position of the reference block pointed by each candidate and the template position of the current block (as illustrated in FIG. 6) is calculated and sorted in an ascending order, and the first six candidates are selected as the candidate list for IBC merge.

On the basis of this list, in IBC ABVP mode, the operation of removing candidate redundancy may also be implemented according to the distance of the candidates.

The number of candidates remains to be two, and the candidate lists are established for integer pixel accuracy and 4-pixel accuracy, respectively.

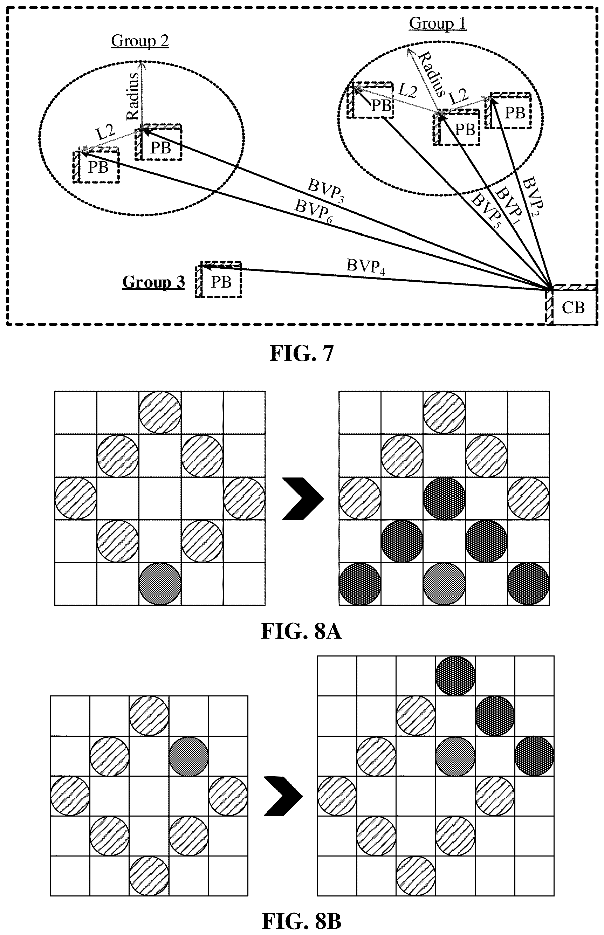

If a non-RRIBC mode is selected for IBC ABVP, as illustrated in FIG. 7, if the number of valid BVP candidates exceeds two, up to six BVP candidates in the candidate list are clustered according to the Euclidean distance between the candidates. The radius (R) is determined as a logarithmic function of the width (cbWidth) and height (cbHeight) of the current block for a set of block vectors, and if the Euclidean distance between reference positions pointed by several BV candidates is less than R, they are clustered.

$$R = \log_2((cbWidth \cdot cbHeight) \gg MIN\_PU\_SIZE)$$

The clustering method is performed in the order of the candidate list. In each class, the BVP with the lowest TM cost is selected as the representative candidate of the group, and then the representative candidates of all classes are ordered according to templates to select the representative candidates of the first two groups for the motion estimation process.

If the RRIBC mode is selected for IBC ABVP, the candidates are adjusted to the boundary pointing to the valid IBC search region according to the horizontal or vertical directions for the RRIBC mode.

2. The selected candidate in the list is determined according to the bitstream

The index bvIdx of the candidate in IBV merge mode (general_merge_flag[xCb][yCb] is true) and IBC ABVP mode (general_merge_flag[xCb][yCb] is false) is derived as follows:

$$bvIdx = general\_merge\_flag[xCb][yCb] \text{ ? } merge\_idx[xCb][yCb]: mvp\_l0\_flag[xCb][yCb]$$

3. The final BV is determined according to the candidate

In IBC merge mode, the specific bvL may be obtained according to the index bvIdx and the list of block vector candidates bvCandList:

$$bvL[\ 0\ ] = bvCandList[\ bvIdx\ ][\ 0\ ]$$

$$bvL[\ 1\ ] = bvCandList[\ bvIdx\ ][\ 1\ ]$$

The bvL is the final BV.

In the IBC MBVD mode, similar to MMVD of the inter technology of VVC, a certain candidate in the IBC merge list is taken as a starting point, and a candidate is selected from the set of candidate points corresponding to the predefined distance and direction set, and the corresponding block vector is the final BV.

**EP 4 697 712 A1**

For example, in IBC MBVD, the distance set is defined as {1-pel, 2-pel, 4-pel, 8-pel, 12 pel, 16 pel, 24 pel, 32 pel, 40 pel, 48 pel, 56 pel, 64 pel, 72 pel, 80 pel, 88 pel, 96 pel, 104 pel, 112 pel, 120 pel, 128 pel}, and the BVD direction includes two horizontal directions (positive and negative) and two vertical directions (positive and negative).

The base candidates are selected from the first five candidates in the reordered IBC merge list, and the refinement locations (i.e. 20 × 4 candidates) of all possible MBVDs for each base candidate are reordered based on the SAD costs between the template and its reference for each refinement location. Finally, the top 8 refinement positions with the minimum template SAD are retained for MBVD index coding. The candidate of IBC-MBVD do not inherit the flip type from Restricted Refinement for Intra Block Copy (RR-IBC) encoded neighboring block. The MBVD index is binarized by a Rice code with a parameter equal to 1.

In IBC TM merge mode, after obtaining bvL according to the above information, TM may also be used to locally refine the BV. The specific operation is to search in a small range centered on the obtained bvL, and select the optimal BV in this range as the final BV based on the minimum template matching cost.

For TM refinement for the candidate list of IBC merge mode, a specific implementation process is as follows.

When constructing the candidates, the flip type is no flip by default.

When IBC TM merge mode is in IBC merge mode, the syntax element is transmitted to specify whether to perform TM refinement for integer-pixel accuracy. The location of the refined motion vector and the template used in each refinement step must comply with the constraint of the reference region.

Search is performed near the position pointed by the candidate, and the SAD between the template of the reference block and the template of the current block is used to determine the optimal position. It includes, but not limited to, the following search manners: the search range is [-8, 8], a diamond search for the integer-pixel is performed first, and eight points near the center position are searched, as shown in FIG. 8A. The maximum search times is 375 times, after the optimal position is determined for the first time, the search is continued, and in the subsequent search process, 5 points are searched for even positions and 3 points are searched for odd positions.

Taking FIG. 8A as an example, one circle counterclockwise from the red point corresponds to the order from indexes 0 to 7. Specifically, when the selected point is the best point, the above process continues to search for five points or three points at the shadow positions. If the selected point is as shown in FIG. 8A, it is continued to search five points. If the selected point is as shown in FIG. 8B, it is continued to search three points.

After the above-mentioned diamond search process, the cross search for the integer-pixel is performed only once. That is, after the current optimal position is found by performing the diamond search, the check is performed at four positions, i.e., below, right, above and left of the current optimal position by one pixel, and the final optimal position is updated. That is, the refined candidate list is obtained by updating.

For the IBC ABVP mode, the bvL obtained by index bvIdx and the list of block vector candidates bvCandList is the prediction bvL, and the Block Vector Difference (BVD) is needed to be added to obtain the true bvL. The general specific process is as follows.

Step 1: the horizontal and vertical components of the BVD are obtained, herein MvdL0 is the forward motion vector difference.

$$\text{bvd[ 0 ] = MvdL0[ xCb ][ yCb ][ 0 ]}$$

$$\text{bvd[ 1 ] = MvdL0[ xCb ][ yCb ][ 1 ]}$$

Step 2: a rounding operation is performed on the obtained prediction bvL, herein the right shift parameter AmvrShift is rounded, and the left shift parameter AmvrShift is used to improve the resolution.

$$\text{offset = ( AmvrShift == 0 ) ? 0 : ( ( 1 << ( AmvrShift } - 1 ) ) - 1 )$$

bvL[0] = Sign(bvL[0] ) * (((Abs( bvL[ 0]) + offset) >>AmvrShift ) << AmvrShift )

$$\text{bvL[ 1 ] = Sign(bvL[ 1 ] ) * ( ( ( Abs( bvL[ 1 ] ) + offset )>>AmvrShift ) <<AmvrShift )}$$

Step 3: the true bvL is derived as follows, and its range needs to be controlled between $-2^{17}$ and $2^{17}$-1:

$$\text{u[ 0 ] = ( bvL[ 0 ] + bvd[ 0 ] + 218 ) \% 218}$$

9

$$bvL[\ 0\ ] = (\ u[\ 0\ ]\ >=\ 217\ )\ ?\ (\ u[\ 0\ ] - 218\ )\ :\ u[\ 0\ ]$$

$$u[\ 1\ ] = (\ bvL[\ 1\ ] + bvd[\ 1\ ] + 218\ )\ \%\ 218$$

$$bvL[\ 1\ ] = (\ u[\ 1\ ]\ >=\ 217\ )\ ?\ (\ u[\ 1\ ] - 218\ )\ :\ u[\ 1\ ]$$

The method of obtaining the BVD in step 1 may also be inferred from the syntax element obtained by other encoding methods. The BVD of the IBC ABVP is in unit of sub-pixel, inter-pixel, or 4 pixels. When encoding, its symbol may be predicted, and its suffix of the exponential Golumbus code obtained after binarization may also be predicted. Therefore, its syntax element can be defined by a plurality of pieces of information of the BVD value: a flag indicating whether it is 0, a prefix, a symbol, and a suffix, and the actual value of BVD can be obtained by combining and parsing their information. A specific embodiment is as follows.

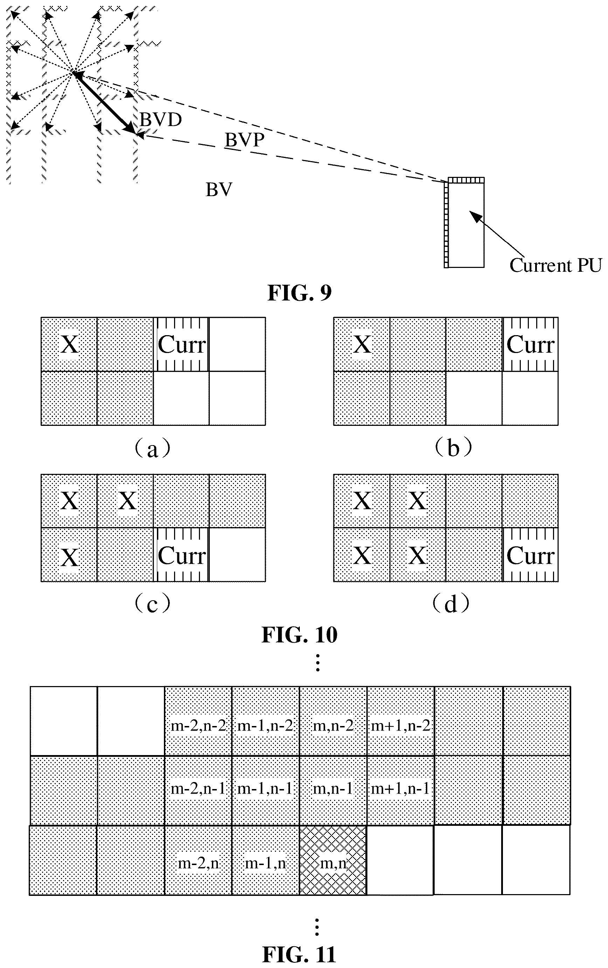

The identification indicating whether the BVD is 0 is context encoded. The value (of absolute value -1) is binarized by using a first-order exponential Columbus, the first 5 bins of the EG1 prefix are context encoded, and the remaining prefixes are bypass coded. Up to 4 bins of the EG1 suffix use context coding to transmit the prediction index, and the other bins of the EG1 suffix use bypass coding. Two bins of the symbol bit transmit the symbol prediction index by using context coding. FIG. 9 shows the prediction process of suffix bins of a horizontal transmission prediction index and a vertical transmission prediction index, and bins of a horizontal transmission symbol index and a vertical transmission symbol index. The template of the current block and the templates at the corresponding BVs are used to sort, and the prediction indexes of the suffix and the symbol are derived.

The final derived BV should be within the specified range (coordinate range in row and column).

For example, in VVC, the reference region of IBC is 128x128. For a CTU with a size of 128x128, the reference region is shown in FIG. 10. In ECM 7.0, as shown in FIG. 11, one box represents a CTU, the grid filled box represents the CTU where the current block is located, and other shape filled boxes represent its reference region. Specifically, for the current block to be encoded, assuming that it is located at the CTU (m, n), the reference region includes the CTUs with an index of (m-2, n-2) ... (W, n-2) ... (0, n-1) ... (W, n-1), (0, n) ... (m, n). Where W represents the maximum horizontal index within the current tile, slice, or picture.

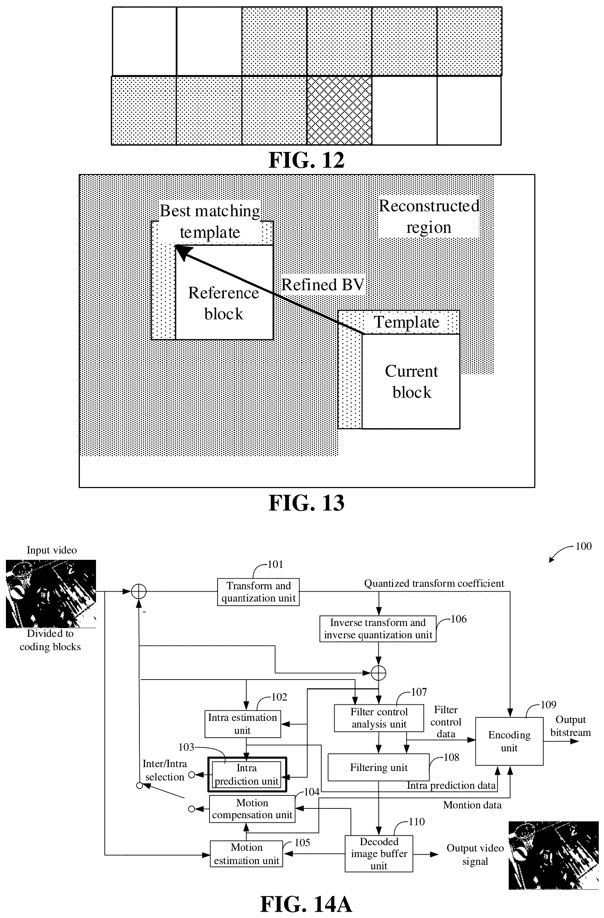

When the size of a CTU is 256, the reference region is adjusted. As shown in FIG. 12, one box represents one CTU, the grid filled box represents the CTU where the current block is located, and other shape filled boxes represent its reference region.

The range for performing block vector search (or local search) for each block is limited to horizontal [-(C<<1), C>>2] and vertical [-C, C > > 2] to accommodate the reference region extension, where C denotes the size of a CTU.

(2) Chroma: In the IBC mode for the chroma component, the BV of the chroma may be derived based on the luma BV, and then prediction and reconstruction may be implemented based on the BV. The process of deriving the chroma BV according to the luma BV is as follows.

Input: bvL of luma (1/16 pixel accuracy)
Output: Block Vector Chroma (bvC) of chroma (1/32 pixel accuracy)

The derivation process may be direct scaling, or scaling followed by refinement with TM. An example of the scaling operation embodiment is as follows:

$$bvC[\ 0\ ] = (\ (\ bvL[\ 0\ ]\ >>\ (\ 3 + SubWidthC\ )\ )\ *\ 32)$$

$$bvC[\ 1\ ] = (\ (\ bvL[\ 1\ ]\ >>\ (\ 3 + SubHeightC\ )\ )\ *\ 32)$$

The variables SubWidthC and SubHeightC depend on the chroma format sampling structure specified by the syntax element sps_chroma_format_idc, and the specific correspondence relationship is as follows.

Table 1 Correspondence between sps_chroma_format_idc and chroma format sampling structure

| sps_chroma_format_idc | Colour sampling format | SubWidthC | SubHeightC |
|---|---|---|---|
| 0 | Monochrome | 1 | 1 |
| 1 | 4:2:0 | 2 | 2 |
| 2 | 4:2:2 | 2 | 1 |

(continued)

| sps_chroma_format_idc | Colour sampling format | SubWidthC | SubHeightC |
|---|---|---|---|
| 3 | 4:4:4 | 1 | 1 |

An embodiment of the refinement operation may be as follows.

TM is used for refinement. That is, after the luma BV is obtained, the offset position is found by using the position of the chroma block and the BV, and the template is used to search near the offset position, and the optimal BV is obtained by taking the minimum TMcost as the standard, as illustrated in FIG. 13.

At S2, the prediction sample is obtained by using the BV.

Input: luma position (xCb, yCb), which specifies the sample at the upper left corner of the current coding block relative to the luma sample at the upper left corner of the current picture, a variable cbWidth, which specifies the width of the current coding block in the luma sample, a variable cbHeight, which specifies the height of the current coding block in the luma sample, a block vector bv, and a variable cIdx, which specifies the colour component index of the current block.

Output: An array of prediction samples predSamples.

An example of the derivation process of directly copying the prediction block is as follows.

When cIdx is equal to 0, i.e, the luma component, for x = xCb.. xCb + cbWidth - 1 and y = yCb.. yCb + cbHeight - 1:

$$xVb = (x + (bvL[0] >> 4)) \& (IbcBufWidthY - 1)$$

$$yVb = (y + (bvL[1] >> 4)) \& (CtbSizeY - 1)$$

$$predSamples[x][y] = ibcVirBuf[0][xVb][yVb]$$

IbcBufWidthY is the width of the luma pixel of the reconstruction buffer stored in the IBC, CtbSizeY is the size of the CTU, and ibcVirBuf is the reconstruction pixel stored in the IBC.

When cIdx is not equal to 0, that is, it is not the chroma component, for x = xCb / SubWidthC..xCb / SubWidthC + cbWidth / SubWidthC - 1 and y = yCb / SubHeightC..yCb / SubHeightC + cbHeight / SubHeightC - 1:

$$xVb = (x + (bvC[0] >> 4)) \& (IbcBufWidthC - 1)$$

$$yVb = (y + (bvC[1] >> 4)) \& ((CtbSizeY / subHeightC) - 1)$$

$$predSamples[x][y] = ibcVirBuf[cIdx][xVb][yVb]$$

In addition to the above basic acquisition methods, there is also an acquisition method in which the prediction region needs to be flipped horizontally or vertically as the prediction value in IBC flipping mode. For example, a syntax element is used for indicating whether to flip, and if flipped, indicating whether to flip horizontally or vertically. The decoding side performs horizontal or vertical reverse rearrangement for the pixels in the reference region according to the indication of the syntax to obtain the prediction pixel value of the coding block.

In addition to the above acquisition process, a model between the current block and the prediction region may be established by using the template, and the prediction block may be processed according to the model to obtain the prediction value for the current block. For example, IBC LIC mode, applied to IBC merge and IBC ABVP, compensates for local illumination variation with a linear equation. Similar to the LIC of inter prediction of VVC, the parameters of the linear equation may be represented by a scaling parameter $\alpha$ and an offset parameter $\beta$, i.e. $A*p[x]+\beta$ to compensate for illumination variation, where p[x] is the reference sample to which the position x of the BV in the current picture points. The least square method is used to derive the linear model parameter.

On the basis of obtaining the prediction value as described above, weighted prediction with other intra prediction manners may also be performed, and the result after the weighted prediction may be used as the final prediction result.

The weighted prediction manner includes a combined inter and intra prediction (CIIP) method in VVC for reference. That is, the result obtained from the above prediction process and the prediction result obtained from the ordinary intra direction prediction mode are weighted combined at each pixel position. The weighted prediction manner also includes the inter geometric prediction mode (GPM) in VVC for reference. That is, based on a wedge division, the results obtained by different prediction modes are used in different wedge regions, and the weighted mixing according to a certain rule is performed near the wedge division line.

An example of the operation process in the IBC CIIP mode is that: the IBC prediction value for the current block is weighted fused with the prediction value of an intra mode, and the IBC prediction part may be obtained by applying conventional merge, TM merge, MBVD and ABVP mode.

For the case where the IBC prediction mode is conventional IBC merge, TM merge, and MBVD mode, the weight ratio of IBC prediction and intra prediction is 13:3. The intra mode includes the TIMD mode for the current block and the intra prediction mode at the candidate BV. If the second prediction mode and the first prediction mode in the intra mode are the same, it is determined whether the first prediction mode is the PLANAR mode. If the first prediction mode is the PLANAR mode, the second prediction mode is replaced with the horizontal prediction mode, otherwise the second prediction mode is replaced with the PLANAR mode.

In the case where the IBC prediction portion is the ABVP mode, the weight ratio of the IBC prediction and the intra prediction is 1: 1, the TIMD mode is required to be the first prediction mode of the intra prediction mode. If the derived prediction mode is the horizontal prediction mode, the PLANAR is required to be the second prediction mode of the intra prediction mode, otherwise, the horizontal prediction mode is acquired to be the second prediction mode.

An example of the operation process in IBC GPM mode is that: the conventional merge and TM merge may be applied to the IBC prediction part. For a mode with only one partition being IBC and only one partition being INTRA, the candidate list of an intra prediction mode (IPM) is constructed by using the same method as inter GPM, and the size of the IPM candidate list is predefined to be 3.

In a specific implementation, there are 48 geometric partition modes, which may be classified into two sets of geometric partition modes.

Table 2 First set of geometric partition modes

| ibc_gpm_partition_idx | 0 | 1 | 2 | 3 | 4 | 5 | 6 | 7 |
|---|---|---|---|---|---|---|---|---|
| angleIdx | 0 | 0 | 8 | 8 | 16 | 16 | 24 | 24 |
| distanceIdx | 1 | 3 | 1 | 3 | 1 | 3 | 1 | 3 |

Table 3 Second set of geometric partition modes

| ibc_gpm_partition_idx | 0 | 1 | 2 | 3 | 4 | 5 | 6 | 7 | 8 | 9 |
|---|---|---|---|---|---|---|---|---|---|---|
| angleIdx | 2 | 2 | 2 | 3 | 3 | 3 | 4 | 4 | 4 | 5 |
| distanceIdx | 0 | 1 | 3 | 0 | 1 | 3 | 0 | 1 | 3 | 0 |
| ibc_gpm_partition_idx | 10 | 11 | 12 | 13 | 14 | 15 | 16 | 17 | 18 | 19 |
| angleIdx | 5 | 5 | 11 | 11 | 11 | 12 | 12 | 12 | 13 | 13 |
| distanceIdx | 1 | 3 | 0 | 1 | 3 | 0 | 1 | 3 | 0 | 1 |
| ibc_gpm_partition_idx | 20 | 21 | 22 | 23 | 24 | 25 | 26 | 27 | 28 | 29 |
| angleIdx | 13 | 14 | 14 | 14 | 18 | 18 | 19 | 19 | 20 | 20 |
| distanceIdx | 3 | 0 | 1 | 3 | 1 | 3 | 1 | 3 | 1 | 3 |
| ibc_gpm_partition_idx | 30 | 31 | 32 | 33 | 34 | 35 | 36 | 37 | 38 | 39 |
| angleIdx | 21 | 21 | 27 | 27 | 28 | 28 | 29 | 29 | 30 | 30 |
| distanceIdx | 1 | 3 | 1 | 3 | 1 | 3 | 1 | 3 | 1 | 3 |

When the IBC GPM is used, a flag of the set of geometric partition mode for IBC GPM is transmitted to indicate whether a first or second set of geometric partition mode is selected, and then a geometric partition mode index is transmitted. The partition flag within the frame of the IBC-GPM is transmitted to indicate whether intra prediction is used for the first sub-partition. The intra prediction part needs to transmit an intra prediction mode index, and the IBC prediction part needs to transmit the MEGRE index.

S3: the reconstructed sample is required.

If there is a residual, the decoding process of the residual signal specified by the decoding specification is called.

The picture reconstruction process of the specified colour component specified by the decoding specification is called.

The embodiments of the present disclosure will be described in detail below with reference to the accompanying drawings.

Referring to FIG. 14A, a schematic block diagram of an encoder provided by an embodiment of the present disclosure is shown. As shown in FIG. 14A, an encoder (specifically, a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, a decoded image buffer unit 110, and the like. The filtering unit 108 may implement de-block filtering and Sample Adaptive Offset (SAO) filtering. The encoding unit 109 may implement header information coding and Context-based Adaptive Binary Arithmetic Coding (CABAC). For the input original video signal, a video coding block may be obtained by dividing a Coding Tree Unit (CTU). Then residual pixel information obtained after intra or inter prediction is transformed by the transform and quantization unit 101 for the video coding block, which includes that the residual information is transformed from the pixel domain to the transform domain, and the obtained transform coefficient is quantized to further reduce the bit rate. The intra estimation unit 102 and the intra prediction unit 103 are configured to perform intra prediction on the video coding block. Specifically, the intra estimation unit 102 and the intra prediction unit 103 are configured to determine an intra prediction mode to be used to encode the video coding block. The motion compensation unit 104 and the motion estimation unit 105 are configured to perform inter prediction coding of the received video coding block with respect to one or more blocks in the one or more reference pictures to provide temporal prediction information. The motion estimation performed by the motion estimation unit 105 is a process of generating a motion vector that may be used to estimate the motion of the video coding block. Then motion compensation is performed by the motion compensation unit 104 based on the motion vector determined by the motion estimation unit 105. After determining the intra prediction mode, the intra prediction unit 103 is further configured to supply the selected intra prediction data to the encoding unit 109, and the motion estimation unit 105 is also configured to transmit the motion vector data determined by calculation to the encoding unit 109. Further, the inverse transform and inverse quantization unit 106 is used for reconstruction of the video coding block, reconstructs a residual block in the pixel domain. Block effect artifacts are removed from the reconstructed residual block by the filter control analysis unit 107 and the filtering unit 108. Then the reconstructed residual block is added to the predictive block in a picture in the decoded image buffer unit 110 to generate the reconstructed video coding block. The encoding unit 109 is configured to encode various coding parameters and quantized transform coefficients. In a CABAC-based encoding algorithm, the context content may be based on adjacent coding blocks, and the encoding unit 109 may be used to encode information indicating the determined intra prediction mode, to output a bitstream for the video signal. The decoded image buffer unit 110 is used to store the reconstructed video coding block for prediction reference. As the video picture coding proceeds, new reconstructed video coding blocks are continuously generated and all of these reconstructed video coding blocks are stored in the decoded image buffer unit 110.

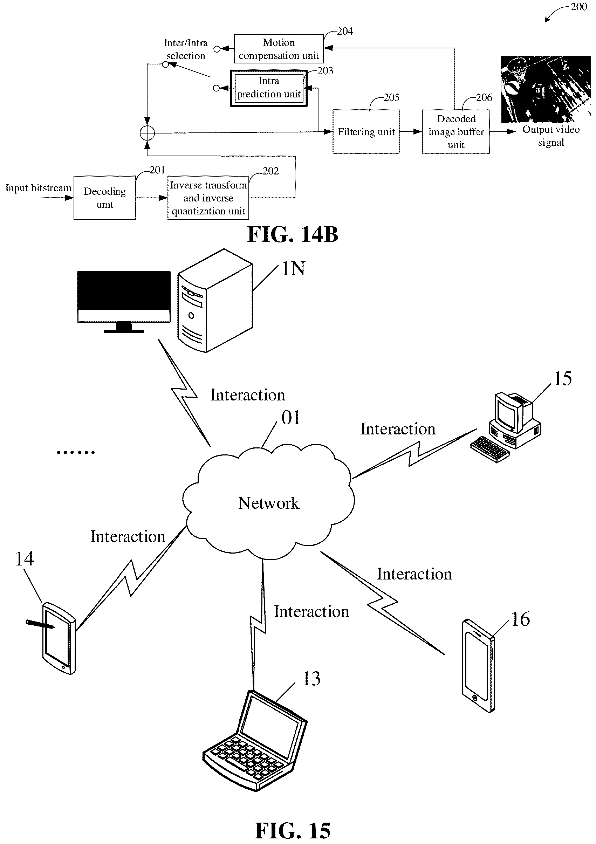

Referring to FIG. 14B, a schematic block diagram of a decoder provided by an embodiment of the present disclosure is shown. As shown in FIG. 14B, a decoder (specifically, a "video decoder") 200 includes a decoding unit 201, an inverse transform and inverse quantization unit 202, an intra prediction unit 203, a motion compensation unit 204, a filtering unit 205, a decoded image buffer unit 206, and the like. The decoding unit 201 may implement header information decoding and CABAC decoding. The filtering unit 205 may implement block removal filtering and SAO filtering. After the input video signal is processed through the encoding process of FIG. 14A, a bitstream for the video signal is output. The bitstream is input into the decoder 200, first passes through the decoding unit 201 for obtaining the decoded transform coefficients. The transform coefficients are processed by the inverse transform and inverse quantization unit 202 to generate a residual block in the pixel domain. The intra prediction unit 203 may be configured to generate prediction data for a current video decoding block based on the determined intra prediction mode and data from previously decoding blocks in the current frame or picture.; The motion compensation unit 204 determines prediction information for a video decoding block by parsing the motion vector and other associated syntax element, and uses the prediction information to generate a predictive block of the video decoding block being decoded. A decoded video block is formed by summing the residual block from the inverse transform and inverse quantization unit 202 with the corresponding predictive block generated by the intra prediction unit 203 or the motion compensation unit 204. The decoded video signal passes through the filtering unit 205 so as to remove block artifacts, which may improve the video quality. The decoded video block is then stored in a decoded image buffer unit 206, which stores the reference picture for subsequent intra prediction or motion compensation. The decoded image buffer unit 206 is also used to output the video signal. That is, the recovered original video signal is obtained.

Further, an embodiment of the present disclosure further provides a network architecture of a codec system including an encoder and a decoder. FIG. 15 shows a schematic diagram of a network architecture of a codec system provided by an embodiment of the present disclosure. As shown in FIG. 15, the network architecture includes one or more electronic devices 13-1N and a communication network 01. The electronic devices 13-1N may perform video interaction through the communication network 01. In implementation, the electronic devices may be various types of devices having video encoding/decoding functions. For example, the electronic device may include a smartphone, a tablet, a personal computer, a personal digital assistant, a navigator, a digital phone, a video phone, a television, a sensing device, a server, and the like, and is not specifically limited herein. Further, the decoder or the encoder according to the embodiments of the present disclosure may be the above-described electronic device.

It is to noted that the methods in the embodiments of the present disclosure are mainly applied to the intra prediction unit 103 as shown in FIG. 14A and the intra prediction unit 203 as shown in FIG. 14B. That is, the embodiments of the present disclosure may be applied to an encoder or a decoder, or may be applied to both the encoder and the decoder, which is not specifically limited in the embodiments of the present disclosure.

It is further to be noted that, when the methods in the embodiments of the present disclosure are applied to the intra prediction unit 103, "a current block" specifically refers to a coding block to be currently subjected to intra prediction. When the methods in the embodiments of the present disclosure are applied to the intra prediction unit 203, "a current block" specifically refers to a decoding block to be currently subjected to intra prediction.

In order to facilitate the understanding of the technical solution of the embodiments of the present disclosure, the technical solution of the present disclosure will be described in detail below with reference to specific examples. As an optional solution, the above related technologies can be arbitrarily combined with the technical solutions of the embodiments of the present disclosure, and all of them belong to the scope of protection of the embodiments of the present disclosure. The embodiments of the present disclosure include at least some of the following contents. The present disclosure provides a coding method, and more particularly provides an intra block copy prediction fusion (IBC Fusion) technology. The reference blocks are determined through the block vector, weighted fusion for the reference blocks is performed, and the prediction block for the current block is determined.

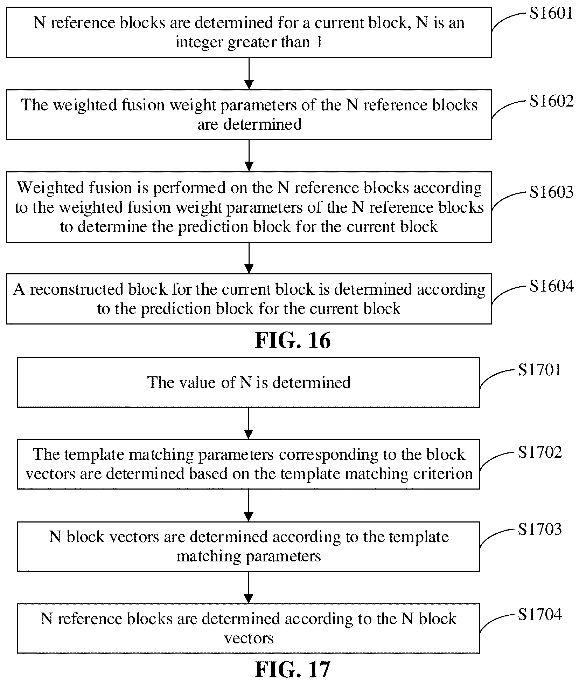

In an embodiment of the present disclosure, referring to FIG. 16, FIG. 16 illustrates a flow schematic diagram of a decoding method according to an embodiment of the present disclosure. As illustrated in FIG. 16, the method may include steps S1601 to S1604.

At S1601, N reference blocks are determined for a current block, N is an integer greater than 1.

In some embodiments, the operation that the N reference blocks are determined for the current block includes followings. A first block vector for the current block is determined according to a block matching criterion. A reference block for the current block is determined according to the first block vector for the current block. In some embodiments, the position pointed by the first block vector is searched to determine an optimal block vector, and a reference block pointed by the optimal block vector is determined. In some embodiments, the position pointed by the first block vector is searched to determine at least two block vectors, and at least two reference blocks pointed by the at least two block vectors are determined.

In some embodiments, the operation that the N reference blocks for the current block are determined includes followings. N block vectors for the current block are determined according to the block matching criterion. N reference blocks for the current block are determined according to the N block vectors for the current block.

In some embodiments, the operation that the N reference blocks are determined for the current block includes followings. The list of block vector candidates for the current block is constructed. The block vector for the current block is determined according to the list of block vector candidates. A reference block for the current block is determined according to the block vector for the current block. In practical applications, the list of block vector candidates is a BV candidate list determined based on the block matching criteria, such as IBC merge, IBC TM merge, IBC ABVP list, etc.

In some embodiments, the operation that the list of block vector candidates for the current block is constructed includes followings. A first list of block vector candidates for the current block is constructed based on the block matching criteria. Here, the first list of block vector candidates may be an IBC merge or an IBC ABVP list. The basic construction process of the IBC ABVP list is same as that of the IBC merge, but the maximum numbers of candidates for the two lists are different (for example, the length of the list of IBC merge candidates is defined as 6, and the length of the list of IBC ABVP candidates is defined as 2).

Further, the operation that the block vector for the current block is determined according to the list of block vector candidates includes followings. The template matching parameters corresponding to at least part of block vectors in the first list of block vector candidates are determined based on a template matching criterion. At least part of the block vectors are sorted according to the template matching parameters to determine the sorted list of block vector candidates. The block vector for the current block is determined according to the sorted list of block vector candidates. Exemplarily, the first N block vectors in the sorted list of block vector candidates are determined. Alternatively, the first block vector in the sorted list of block vector candidates is determined.

FIG. 17 is a schematic flow diagram of a method for determining a reference block according to an embodiment of the present disclosure. As shown in FIG. 17, the method includes steps S1701 to S1704. At S1701, the value of N is determined. At S1702, the template matching parameters corresponding to the block vectors are determined based on the template matching criterion. At S1703: N block vectors are determined according to the template matching parameters. At S 1704, N reference blocks are determined according to the N block vectors.

In some embodiments, after determining the value N of the number of candidate BVs, N block vectors (BVs) that are more matched need to be selected with a certain comparison criteria. For example, for the IBC merge list, the block vector BVn is determined. That is, after obtaining the matching templates according to the template offsets pXn and pYn, the template matching costs are calculated, and the BVs corresponding to N matching templates with smaller costs are recorded. The N matching templates are also referred to as reference templates. The template matching criterion may be one of SAD, SATD, MSE, MAD, RDO, correlation coefficient, PSNR or other cost functions used to measure the mode.

For example, the template matching criterion is Mean Absolute Difference (MAD), and the calculation formula is as follows:

$$\text{MAD}(refT) = \frac{1}{M} \sum_{m=0}^{M-1} |refT_m - curT_m|$$

where refT is the matching template in the list of BV candidates, curT is the template of the current block, M is the number of pixels of the template of the current coding block, and MAD (refT) is the mean absolute difference of the template of the current coding block curT and the matching templates corresponding to the BV candidates.

The screening criterion based on MAD is that: the BVs corresponding to N matching templates with the lowest MAD costs are compared and recorded.

Specifically, for N candidate templates, the MAD between the n-th candidate template and the template of the current coding block is as follows:

$$\text{MAD}(refT_n) = \frac{1}{M} \sum_{m=0}^{M-1} |refT_{n,m} - curT_m|$$

where refTn is the n-th candidate template, MAD (refTn) is the mean absolute difference between the template of the current block curT and the n-th candidate template, n = 0, ..., N-1.

In some embodiments, the operation that the list of block vector candidates for the current block is constructed includes followings. The first list of block vector candidates for the current block is constructed based on a block matching criterion. Based on the template matching criterion, a search range pointed by at least part of the block vectors in the first list of block vector candidates is searched to determine a second list of block vector candidates. Exemplarily, the first N block vectors in the second list of block vector candidates are determined. Alternatively, the first block vector in the second list of block vector candidates is determined. Here, the first list of block vector candidates may be an IBC merge or an IBC ABVP list. The basic establishment process of the IBC ABVP list is same as that of the IBC merge, but the maximum numbers of candidates for the two lists are different (for example, the length of the list of IBC merge candidates is defined as 6, and the length of the list of IBC ABVP candidates is defined as 2). The second list of block vector candidates may be IBC TM merge. In IBC TM merge mode, after obtaining bvL according to IBC merge, TM may also be used to locally refine the BV. The specific operation is to search in a small range centered on the obtained bvL, and select one or more optimal BVs in this range as the final BVs based on the template matching parameters.

In some other embodiments, the operation that the block vector for the current block is determined according to the list of block vector candidates includes followings. N block vectors for the current block are determined according to the list of block vector candidates. Exemplarily, the list of block vector candidates includes at least N block vectors, the first N block vectors are determined in the block vector candidate list. N reference blocks pointed by the N block vectors are determined.

In some embodiments, the value of N is determined to be a preset value. In some embodiments, the value of N is determined according to the value of the first identification parameter of the current block. In some embodiments, a first syntax element of the current block is decoded, and the value of the first identification parameter is determined according to a value of the first syntax element. In some embodiments, at least two candidate values of N are determined. The prediction template sample corresponding to each candidate value is determined according to the at least two candidate values. The template matching parameters of the prediction template samples and a template sample of the current block are determined based on a template matching criteria. The value of the first identification parameter is determined according to the template matching parameters.

It is to be noted that N may be a constant preset by the encoding and decoding sides. For example, N is 2, or 3, or 4, or 5. N may also be within a certain value range. For example, N may be any integer within [2, 6]. The range of N may be preset, the value of N may be determined based on the template matching criterion, or the optimal value of N may be determined at the encoding side and transmitted to the decoding side in the form of a bitstream. The cost function used to measure the performance of the fusion mode may be one of SAD, SATD, MSE, MAD, RDO, etc.

N BVs are obtained, and a reference block RefBlockn is directly obtained in the current picture according to BVn. Herein the horizontal offset of BVn is pXn and the vertical offset of BVn is pYn, where n = 0, 1..., N-1.

The simple translation and copy are used to implement. The specific operation is: for x = 0... nTbW-1, y = 0... nTbH-1,

$$\text{RefBlockn } [x][y] = recSamples[x + pXn][y + pYn]$$

where recSamples represents the reconstructed pixel value of the current picture. After obtaining the N reference blocks RefBlock, it is further necessary to determine the weight parameters Wn of the N reference blocks for weighted fusion, and the weighted fusion is implemented by using the reference blocks RefBlock and the weight parameters Wn.

In some embodiments, the value of N may be fixed to be 2. That is, only the reference blocks corresponding to BVs with indexes 0 and 1 in the Merge list are used to perform weighted fusion. If the Merge list is IBCmerge, the order in the list of BV candidates has been sorted according to the block matching parameters (such as SAD). That is, the first two BVs are the two BVs with the lowest SAD cost, and the reference blocks corresponding to the first two BVs in the list of BV candidates are used to perform weighted fusion, which is relatively accurate.

In some embodiments, the value of N may be fixed to be 2, and the template matching parameters (such as SAD) of the reference templates corresponding to the first M BVs in the Merge list and the template of the current block are calculated, and two BVs with the lowest SAD cost are selected for weighted fusion. M is an integer greater than or equal to 2.

In some embodiments, the method further includes following operations. It is determined whether a fusion prediction mode is used for the current block according to a value of a second identification parameter of the current block.

In some embodiments, the method further includes following operations. The second syntax element is decoded, and the value of the second identification parameter is determined according to the value of the second syntax element. Alternatively, at least two candidate prediction modes are determined; the prediction template sample corresponding to each candidate prediction mode is determined according to the at least two candidate prediction; the template matching parameters of the prediction template samples and the template sample of the current block are determined based on the template matching criteria; the optimal prediction mode is determined according to the template matching parameters; and the value of the second identification parameter is determined according to the optimal prediction mode.

In some embodiments, the value of the second identification information is a first value, and it is determined that the fusion prediction mode is used for the current block. The value of the second identification information is a second value, and it is determined that the fusion prediction mode is not used for the current block.

In some embodiments, the method further includes that: when it is determined that the fusion prediction mode is used for the current block, the method of S1601 to S1604 is performed. In some embodiments, the method further includes following operations. In a case where the fusion prediction mode is not used for the current block, a first reference block for the current block is determined. The prediction block for the current block is and determined according to the first reference block. Exemplarily, the first block vector for the current block is determined, and the first reference block is determined according to the first block vector.

For example, an isFusion_Flag (which may be understood as the second identification parameter or the second syntax element) is set, and if the isFusion_Flag is 1, the two BVs with derived costs being the best based on the template matching criterion are used for weighted fusion at both the encoding side and the decoding side. If the isFusion_Flag is 0, the weighted fusion is not performed.

At S 1602, the weighted fusion weight parameters of the N reference blocks are determined.

It is to be noted that before performing weighted fusion, the weighted fusion weight parameters Wn of N reference blocks (which may be represented as RefBlock) need to be determined. The weight parameter may be a predefined value, or may be a value adaptively calculated by using the template matching parameter, the block matching parameter, the pixel value, etc.

It is to be noted that the weight parameters of different reference blocks are same or different. In some embodiments, the operation that the weighted fusion weight parameters of the N reference blocks are determined includes followings. The weighted fusion weight parameters of the N reference blocks are determined to be a preset weight parameter.

In some embodiments, the weighted fusion weight parameters of the N reference blocks are determined according to the value of the third identification parameter. Exemplarily, the value of the third identification parameter is used to indicate one weighted fusion weight parameter or a set of weighted fusion weight parameters. The third identification parameter may be identification information of one weighted fusion weight parameter or identification information of a set of weighted fusion weight parameters. In some embodiments, the bitstream is decoded to determine the third syntax element. The value of the identification parameter is determined according to the value of the third syntax element.

In some embodiments, the operation that the weighted fusion weight parameters of the N reference blocks are determined includes followings. A template sample of the current block is determined, and the reference template samples of the N reference blocks are determined. The matching reference samples are determined according to the reference template samples of the N reference blocks. The weighted fusion weight parameters of reconstructed reference samples corresponding to the matching reference samples are determined according to the template sample of the current block and the matching reference samples. The matching reference samples include the N reference template samples, and the weighted fusion weight parameters of the reconstructed reference samples include the weighted fusion weight parameters of the N reference blocks.

Here, the matching reference samples are applied to the process of deriving weighted fusion weight parameters. The reconstructed reference samples are applied to the process of applying weighted fusion weight parameters. The set of weighted fusion weight parameters derived according to the matching reference samples are applied to weighted fusion for the reconstructed reference samples corresponding to the matching reference samples.

In some embodiments, the operation that the weighted fusion weight parameters of reconstructed reference samples corresponding to the matching reference samples are determined according to the template sample of the current block and the matching reference samples includes followings. The template matching parameters are determined according to the template sample of the current block and the matching reference samples. Weight parameter derivation is performed according to the template matching parameters to determine the weighted fusion weight parameters of the reconstructed reference samples.

The template matching criterion may be one of SAD, SATD, MSE, MAD, RDO, correlation coefficient, PSNR or other cost functions used to measure the mode. That is, the template matching parameter is a matching parameter determined based on the selected template matching criterion. The optimal solution for the template matching parameters is solved by optimization algorithm, and the weight parameters of the matching reference samples corresponding to the reconstructed reference samples are derived.

In some embodiments, the operation that the weighted fusion weight parameters of reconstructed reference samples corresponding to the matching reference samples are determined according to the template sample of the current block and the matching reference samples includes followings. An autocorrelation parameter is determined according to pixel reference values of samples in the matching reference samples. A cross-correlation parameter is determined according to a pixel reference value of the template sample of the current block and the pixel reference values of the samples in the matching reference samples. The weighted fusion weight values of candidate reconstructed samples corresponding to the matching reference samples are determined according to the autocorrelation parameter and the cross-correlation parameter.

Exemplarily, the weighted fusion weights are derived by minimizing the MSE with the reconstruction values of the matching reference samples refTn and the pixel value of the template sample curT of the current block.

When the matching reference samples include the reference template samples of N reference blocks, only N weighted fusion weights need to be derived. For convenience of description, the number of weighted weights is recorded by a variable P, where P=N, and all reference quantities participating in the operation may be uniformly denoted as refTp. Similarly, the reference blocks are uniformly referred to as a reconstructed reference sample refBlockp, where p = 0, 1..., P-1. The specific implementation is as follows.

Specifically, the MSE minimization process takes the autocorrelation matrix of the first P matching reference samples refT, the cross-correlation vectors of the first P matching reference samples refT and the template sample curT of the current coding block as the input, and outputs the weight of the reference block corresponding to each of the matching reference samples. The specific implementation is as follows. The MSE calculation formula is as follows:

For the pixel of each candidate template at the same position, i.e. for m = 0, 1..., m-1:

$$MSE = \frac{1}{P}\sum_{p=0}^{P-1}\left(refpredT_p - curT\right)^2 = \frac{1}{P}\sum_{p=0}^{P-1}\left(\sum_{p=0}^{P-1}w_p \cdot refT_p - curT\right)^2$$

In order to facilitate the expression of the calculation formula for MSE, E used herein represents the mean square error (MSE), i.e.,

$$MSE = E[\left(refpredT_p - curT\right)^2] = E[\left(\sum_{p=0}^{P-1}w_p \cdot refT_p - curT\right)^2]$$

The specific steps for deriving the weight $w_n$ of the reference block corresponding to each reference template by minimizing the MSE are as follows.

(1) First the partial derivation for $w_n$ is calculated and it is set to be 0:

$$\frac{\partial MSE}{\partial w_m} = E\left[2\left(\sum_{p=0}^{P-1} w_p \cdot refT_p - curT\right) \cdot refT_p\right], m = 0,1,\ldots,P-1$$

$$E\left[2\left(\sum_{p=0}^{P-1} w_p \cdot refT_p - curT\right) \cdot refT_p\right] = 0$$

Sorting out is performed to obtain:

$$\sum_{p=0}^{P-1} w_p \cdot E\left(refT_p \cdot refT_p\right) = E\left(curT \cdot refT_p\right)$$

(2) After determining the reference template samples refT0, refT1, ... refTP-1, the equation obtained in (1) is expanded into a matrix form as:

$$A \times \begin{bmatrix} w_0 \\ w_1 \\ \vdots \\ w_{P-1} \end{bmatrix} = B$$

For A, the pixel reference values in the reference template samples are denoted by refT[i][j], and A denotes the autocorrelation parameter of refT[i][j]. Details are as follows:

$$A = \begin{bmatrix} \sum_{i \in refT_0}\left(refT[i][0]\cdot refT[i][0]\right) & \sum_{i \in refT_0}\left(refT[i][1]\cdot refT[i][0]\right) & \cdots & \sum_{i \in refT_0}\left(refT[i][P-1]\cdot refT[i][0]\right) \\ \sum_{i \in refT_1}\left(refT[i][0]\cdot refT[i][1]\right) & \sum_{i \in refT_1}\left(refT[i][1]\cdot refT[i][1]\right) & \cdots & \sum_{i \in refT_1}\left(refT[i][P-1]\cdot refT[i][1]\right) \\ \vdots & \vdots & \ddots & \vdots \\ \sum_{i \in refT_{P-1}}\left(refT[i][0]\cdot refT[i][P-1]\right) & \sum_{i \in refT_{P-1}}\left(refT[i][1]\cdot refT[i][P-1]\right) & \cdots & \sum_{i \in refT_{P-1}}\left(refT[i][P-1]\cdot refT[i][P-1]\right) \end{bmatrix}$$

For B, the pixel reference value in the template sample of the current block is denoted by curT, and B denotes the cross-correlation parameter of curT and refT[i][p]. Details are as follows:

$$B = \begin{bmatrix} \sum_{i \in refT_0}\left(curT \cdot refT[i][0]\right) \\ \sum_{i \in refT_1}\left(curT \cdot refT[i][1]\right) \\ \vdots \\ \sum_{i \in refT_{P-1}}\left(curT \cdot refT[i][P-1]\right) \end{bmatrix}$$

(3) Both the autocorrelation parameter and cross-correlation parameter are known quantities. By solving the linear equation in (2), the weights w0, ... $w_{P-1}$ of the reconstructed samples corresponding to the candidate templates may be calculated.

In some embodiments, the operation that the matching reference samples are determined according to the reference template samples of the N reference blocks includes followings. A first parameter sample is determined. The matching reference samples are determined according to the reference template samples of the N reference blocks and the first parameter sample. The weighted fusion weight parameters of the reconstructed reference samples further include a weighted fusion weight parameter of the first parameter sample. That is, the processing for the matching reference sample includes the reference template samples of the N reference blocks, and may also include the first parameter sample, thereby making the weight derivation process more flexible. Accordingly, the weighted fusion weight parameters of the reconstructed reference samples include the weighted fusion weight parameters of the N reference blocks and the weighted fusion weight parameter of the first parameter sample.

It is to be noted that the first parameter sample includes parameters of a plurality of pixels, and the parameter of each pixel point may be a preset constant or a non-constant. For example, it is a non-constant determined according to the reference template.

In some embodiments, the first parameter sample includes the first sample. The operation that the first parameter sample is determined includes followings. The first sample is determined according to a first template sample in the reference template samples of the N reference blocks. The first template sample may be any one or a specific one of the reference template samples of the N reference blocks.

In some embodiments, the first sample is determined according to the first template sample in the reference template samples of the N reference blocks includes followings. A pixel reference value of the first sample is determined by rounding a square value of a pixel reference value of the first template sample.

Exemplarily, the first sample may be a nonlinear term sample, and the nonlinear term sample may include a plurality of non-constant parameters. For example, the nonlinear term sample may include a nonlinear parameter corresponding to each pixel in the reference template sample. In deriving the weighted fusion weights, the nonlinear term NonLinearTerm_T is constructed based on the reference template samples. For example, one reference template sample whose sequence number is 0 is selected from the reference template samples corresponding to the N candidate BVs for construction.

Specifically: for m = 0, 1..., M-1:

$$\mathrm{NonLinearTerm\_T}_{n,m} = \left(\mathrm{refT}_{n,m} * \mathrm{refT}_{n,m} + \mathrm{MidVal}\right) \gg \mathrm{bitDepth}$$

where N is 0, 1,... or N-1, which represents a certain reference template sample in the N reference template samples. MidVal is 1<<(bitDepth-1), and bitDepth is the picture bit depth.

For each of the reference blocks corresponding to N reference template samples, the nonlinear term NonLinearTerm_Block is constructed based on the reference block when the weighted fusion weight is applied. Exemplarily, the reference block corresponding to the sequence number 0 is selected to determine the nonlinear term.

Specifically, for x = 0,1...nTbW-1, y = 0...nTbH-1,

$$\mathrm{NonLinearTerm\_Block}_{n,x,y} = \left(\mathrm{refBlock}_{n,x,y} * \mathrm{refBlock}_{n,x,y} + \mathrm{MidVal}\right) \gg \mathrm{bitDepth}$$

where N is 0, 1,... or N-1, which represents a certain reference block in the N reference blocks. MidVal is 1<<(bitDepth-1), and bitDepth is the picture bit depth.

In some embodiments, the first parameter sample includes a second sample. The operation that the first parameter sample is determined includes followings. The second sample is determined according to the picture pixel range.

Exemplarily, the second sample may be an offset value Bias, and the offset value Bias in the weight derivation process and the weight application process may be any one constant within the picture pixel range [0, (1 < < bitDepth)-1]. Exemplarily, Bias is set to be 1<<(bitDepth-1).

Since BiasTerm is a constant, it needs to be extended to a matrix denoted as BiasTerm in the actual calculation process. Details are as follows.

For each template in the N reference template samples: for m = 0, 1 ..., M-1, BiasTerm$_m$= Bias.

For each of the reference blocks corresponding to N reference template samples: for x = 0, 1... nTbW-1, y = 0... nTbH-1, BiasTerm$_{x,\,y}$= Bias.

It is to be noted that N+1 weighted fusion weights need to be derived to add the first sample or the second sample. For convenience of description, a variable P is used to record the number of weighted weights, where P = N+1. The reference template samples and the first sample/the second sample are uniformly referred to as the matching reference samples refTN and refTN+1, so that all reference quantities participating in the operation may be uniformly denoted as refTp. Similarly, the reference blocks and the first sample/the second sample are uniformly referred to as the reconstructed reference sample refBlockp, where p = 0, 1..., P-1. Specifically, the MSE minimization process takes the autocorrelation matrix of the first P matching reference samples refT, the cross-correlation vectors of the first P matching reference samples refT and the template sample curT of the current coding block as the input, and outputs the weights of the reference blocks and the first sample weight/second sample weight.

It is to be noted that N+2 weighted fusion weights need to be derived to add the first sample and the second sample. For convenience of description, a variable P is used to record the number of weighted weights, where P = N+2. The reference template samples, the first sample and the second sample are uniformly referred to as the matching reference samples refTN, refTN+1 and refTN+2, so that all reference quantities participating in the operation may be uniformly denoted as refTp. Similarly, the reference blocks and the first sample/the second sample are uniformly referred to as the reconstructed reference sample refBlockp, where p = 0, 1..., P-1. Specifically, the MSE minimization process takes the autocorrelation matrix of the first P matching reference samples refT, the cross-correlation vectors of the first P matching reference samples refT and the template sample curT of the current coding block as the input, and outputs the weights of the reference blocks, the first sample weight and the second sample weight.

In some other embodiments, the operation that the weighted fusion weight parameters of the N reference blocks are determined includes followings. A template sample of the current block is determined, and the reference template samples of the N reference blocks are determined. The template matching parameters of the template sample of the current block and the reference template samples are determined based on a template matching criterion. The weighted fusion weight parameters of the N reference blocks are determined according to a weight model preset for the template matching parameters.

In some embodiments, the weight model may be constructed based on a nonlinear function, and the weight model may be understood as a nonlinear weight model. The input of the weight model is the template matching parameter between the template curT of the current block and the reference template refTn, and the output is the weight parameter. Exemplarily, the nonlinear function includes, but is not limited to, a nonlinear normalization function, a nonlinear exponential normalization function, etc. The template matching parameter includes, but are not limited to, SAD (refTn), MAD (refTn), correlation coefficient R (refTn), or the like between the template curT of the current block and the reference template refTn.

Exemplarily, the weight model is configured to: obtain first intermediate values according to the template matching parameters and a first offset value; determine an accumulated sum of N first intermediate values; and determine the weighted fusion weight values of the N reference blocks according to ratios of the first intermediate values to the accumulated sum of the N first intermediate values. One calculation formula may be as follows:

$$w_n = \frac{\dfrac{1}{MAD_{refT_n} + offset}}{\sum_{n=0}^{N-1} \dfrac{1}{MAD_{refT_n} + offset}}, n = 0,1,\dots,N-1$$

where offset is a preset value. For example, offset is 1.

Exemplarily, the weighting model is configured to: determine an accumulated sum of template matching parameters of the N reference template samples; and determine the weighted fusion weight values of the N reference blocks according to ratios of the template matching parameters to the accumulated sum of the template matching parameters. One calculation formula may be as follows:

$$w_n = \frac{R_{refT_n}}{\sum_{n=0}^{N-1} R_{refT_n}}, n = 0,1,\dots,N-1$$

Exemplarily, the weight model is constructed based on the Softmax function. The control parameter of the weight model is determined according to the size and/or the template type of the current block. One calculation formula may be as follows:

$$w_n = \frac{e^{\frac{-MAD_{refT_n}}{S}}}{\sum_{n=0}^{N-1} e^{\frac{-MAD_{refT_n}}{S}}}, n = 0,1,\dots,N-1$$

where S is the model control parameter. Under a certain condition, the parameter S may be adjusted to adjust the weight model. For example, the parameter S may be related to the size or the template type of the current block.

In addition to the nonlinear weight model described above, the weighted fusion weights of the reference blocks may be directly set to be an average value. That is, the average value of N reference block pixels may be calculated as the prediction value of the current block pixel. For example:

$$w_n = \frac{1}{N}, n = 0, 1, \dots, N-1$$

At S1603, weighted fusion is performed on the N reference blocks according to the weighted fusion weight parameters of the N reference blocks to determine the prediction block for the current block.

Weighted fusion is performed according to the reference blocks and the corresponding weighted fusion weight parameters thereof to obtain the prediction block. Specifically, the pixel reference value of each reference block and the corresponding weight parameter thereof are multiplied and accumulated to obtain the current prediction value. The calculation formula is as follows.

For x = 0...nTbW-1, y = 0...nTbH-1, the calculation for the prediction value is as follows:

$$\text{predSamples}_{x,y} = \sum_{p=0}^{P-1} w_{p,x,y} * RefBlock_{p,x,y}$$

Each prediction value predSamples$_{x,y}$ is spatially stored to be the output prediction block of IBC Fusion.

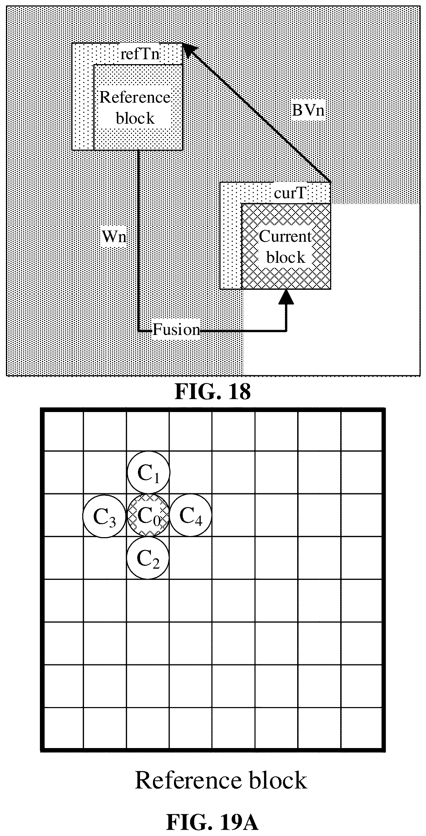

It is to be noted that the present disclosure proposes an improved process of determining the block vector BV for the IBC and generating the prediction value. Specifically, IBC Fusion technology is proposed. As shown in FIG. 18, N reference blocks are determined according to BVn, N reference blocks are fused according to corresponding weighted fusion parameters Wn to obtain the prediction block for the current block, such that it makes full use of the information of the reconstructed blocks of different matching templates, thereby improving prediction accuracy and coding efficiency.

Further, in some embodiments, before performing weighted fusion on the N reference blocks, the method further includes following operations. Correction or picture enhancement is performed on the N reference blocks to determine the N processed reference blocks. Exemplarily, the N reference blocks are filtered to determine N filtered reference blocks. The filtering manner may be traditional filtering methods such as bilateral filtering, mean filtering, etc., it may also be filtering enhancement based on neural network. The correction manner may also use the matching template information to correct the matching reconstructed block.

In some embodiments, the method further includes following operations. A template sample of the current block is determined. The matching reference samples are determined according to N reference template samples. A coefficient of a target filter is determined according to the template sample of the current block and the matching reference samples.

In some embodiments, the operation that the coefficient of the target filter is determined according to the template sample of the current block and the matching reference samples includes followings. The template matching parameters are determined according to the template sample of the current block and the matching reference samples. Weight parameter derivation is performed according to the template matching parameters to determine the coefficient of the target filter.

In some embodiments, the operation that the weighted fusion weight parameters of reconstructed reference samples corresponding to the matching reference samples are determined according to the template sample of the current block and the matching reference samples includes followings. An autocorrelation parameter is determined according to pixel reference values of samples in the matching reference samples. A cross-correlation parameter is determined according to a pixel reference value of the template sample of the current block and the pixel reference values of the samples in the matching reference samples. The coefficient of the target filter is determined according to the autocorrelation parameter and the cross-correlation parameter.

In some embodiments, the matching reference samples further includes a second parameter sample. Exemplarily, the second parameter sample may be an offset value Bias, and the offset value Bias in the process of deriving the coefficient of the filter may be any one constant within the picture pixel range [0, (1<<bitDepth)-1]. Exemplarily, Bias is set to be 1<<(bitDepth-1).

The specific operations for the embodiment of correcting the matching reconstructed block by using the information of matching templates are as follows. For the matching reference samples refTn and the corresponding reconstructed reference samples RefBlockn, the parameter vectors Cn are calculated according to the template matching parameters of the reconstruction values of the matching reference samples refTn and the pixel value of the template sample curT of the current block, and the parameter vectors Cn are used to correct the reference blocks RefBlockn to obtain the finally corrected reference blocks RefBlock'n.

Exemplarily, the parameter vectors Cn are derived by minimizing the MSE of the reconstruction values of the matching reference samples refTn and the pixel value of the template sample curT of the current block. The parameter vector Cn may be regarded as an L-tap filter. The specific method of calculating the parameter vector Cn is as follows: for each candidate template refTn, where n = 0, 1..., N-1, the process of MSE minimization will take the autocorrelation matrix of the matching the reference sample refT and the cross-correlation vector of the matching the reference sample refT and the template sample curT of the current coding block as input, and output the parameter vector Cn.

In some embodiments, a matching reference sample used for calculating the filter coefficient is first determined, the derivation is performed by minimizing the MSE of the reconstruction values of the matching reference samples refTn and the template sample curT of the current block, and a set of filter coefficients may be obtained, that is:

$$MSE = \frac{1}{K}\sum_{k=0}^{K-1}\left(refpredT_k - curT\right)^2 = \frac{1}{K}\sum_{k=0}^{K-1}\left(\sum_{l=0}^{L-1}c_l \cdot refT_k - curT\right)^2$$

In order to facilitate the expression of the calculation formula for MSE, E used herein represent the mean square error (MSE), i.e.,

$$MSE = E[\left(refpredT_k - curT_k\right)^2] = E[\left(\sum_{l=0}^{L-1}c_l \cdot refT_k - curT_k\right)^2] \quad , k=0, 1 \ldots K\text{-}1, l=0, 1 \ldots, L\text{-}1$$

where $refpredT_k$ represents the input reconstruction pixel value, $curT_k$ represents the reconstruction pixel value of the template of the current block, K is the number of pixels in the template, k is a certain pixel in the template, and also represents that (i, j) may be used to represent the coordinate position of pixel in the template, (i, j)$\in$ R, $c_l$ represents the required filter coefficient. The specific steps for deriving the filter coefficient $c_l$ for each reference block by minimizing the MSE are as follows.

(1) First the partial derivation for $c_l$ is calculated and it is set to be 0:

$$\frac{\partial MSE}{\partial c_l} = E\left[ 2\left(\sum_{l=0}^{L-1}c_l \cdot refT_k - curT_k\right) \cdot refT_k \right], l = 0,1,\ldots,L-1$$

$$E\left[ 2\left(\sum_{l=0}^{L-1}c_l \cdot refT_k - curT_k\right) \cdot refT_k \right] = 0$$

Sorting out is performed to obtain:

$$\sum_{l=0}^{L-1}c_l \cdot E\left(refT_k \cdot refT_k\right) = E\left(curT_k \cdot refT_k\right)$$

(2) After determining the reference template samples refTn, the equation obtained in (1) is expanded into a matrix form as:

$$A\times \begin{bmatrix} c_0 \\ c_1 \\ \vdots \\ c_{L-1} \end{bmatrix} = B$$

For A, the pixel reference values in the reference template samples is denoted by refT[k][1], and A denotes the autocorrelation parameter of refT[k][1]. Details are as follows:

$$A = \begin{bmatrix} \sum_{k \in refT(n)} \left( refT[k][0] \cdot refT[k][0] \right) & \sum_{k \in refT(n)} \left( refT[k][1] \cdot refT[k][0] \right) & \cdots & \sum_{k \in refT(n)} \left( refT[k][L-1] \cdot refT[k][0] \right) \\ \sum_{k \in refT(n)} \left( refT[k][0] \cdot refT[k][1] \right) & \sum_{k \in refT(n)} \left( refT[k][1] \cdot refT[k][1] \right) & \cdots & \sum_{k \in refT(n)} \left( refT[k][L-1] \cdot refT[k][1] \right) \\ \vdots & \vdots & \ddots & \vdots \\ \sum_{k \in refT(n)} \left( refT[k][0] \cdot refT[k][L-1] \right) & \sum_{k \in refT(n)} \left( refT[k][1] \cdot refT[k][L-1] \right) & \cdots & \sum_{k \in refT(n)} \left( refT[k][L-1] \cdot refT[k][L-1] \right) \end{bmatrix}$$

For B, the pixel reference value in the template sample of the current block is denoted by curT[k], and B denotes the cross-correlation parameter of curT[k] and refT[k][1]. Details are as follows:

$$B = \begin{bmatrix} \sum_{k \in refT(n)} \left( curT[k] \cdot refT[k][0] \right) \\ \sum_{k \in refT(n)} \left( curT[k] \cdot refT[k][1] \right) \\ \vdots \\ \sum_{k \in refT(n)} \left( curT[k] \cdot refT[k][L-1] \right) \end{bmatrix}$$

(3) Both the autocorrelation parameter and the cross-correlation parameter are known quantities. By solving the linear equations in (2), the weight coefficients c0, ... cL-1 of the filter may be obtained, i.e., the filtering coefficient of a certain candidate reconstructed block in the correction parameter vectors Cn.

The corrected reference block RefBlock'n is:
For x = 0...nTbW-1, y = 0...nTbH-1:

$$\text{RefBlock}'_{n,x,y} = \sum_{l=0}^{L-1} c_l * \text{RefBlock}_{n,x,y}$$

In an embodiment of the present disclosure, for the target filter, it is necessary to determine the number of coefficients of the target filter, the shape of the target filter, etc. Both the number of coefficients of the target filter and the shape of the target filter may be preset fixed values, or may be directly determined by decoding the bitstream.

In some embodiments, for the number of coefficients of the target filter, the method may further include following operation. The number of coefficients of the target filter is equal to a first preset value.

In some embodiments, for the number of coefficients of the target filter, the method may further include following operation. The bitstream is decoded to determine the number of coefficients of the target filter.

It is to be noted that the number of coefficients of the target filter may be denoted by nTap. For example, the value of nTap may be 4, 5, 6, 7, 8, 9, etc., which is not limited herein.

It is further to be noted that the number of coefficients of the target filter may also be referred to as the number of target filter taps. Here, the number of coefficients of the target filter may be a preset constant value, may be determined by decoding the bitstream, or may be determined according to the syntax element identification information of the current block.

In some embodiments, for the shape of the target filter, the method may further include that the target filter is a one-dimensional or two-dimensional filter of a preset shape.

In some embodiments, for the shape of the target filter, the method may further include following operation. The bitstream is decoded to determine the shape of the target filter.

In some embodiments, for the shape of the target filter, the method may further include following operation. The bitstream is decoded to determine a value of the filter shape parameter, herein the filter shape parameter indicates the shape of the target filter.

It is to be noted that the filter shape parameter may be denoted by FilterIdx, and FilterIdx is used to indicate the shape of the target filter. For example, the shape of the target filter may be a diamond, a rectangle, a cross, a bar, or even a one-dimensional filter, a two-dimensional filter, or the like, which is not particularly limited herein.

For example, if the value of FilterIdx is equal to 0, it is determined that the shape of the target filter is a diamond. If the value of FilterIdx is equal to 1, it is determined that the shape of the target filter is cross-shaped. If the value of FilterIdx is equal to 2, it is determined that the shape of the target filter is rectangular.

It is further to be noted that the shape of the target filter may be a preset shape, may be determined by decoding the bitstream, or may be determined according to the syntax element identification information of the current block.

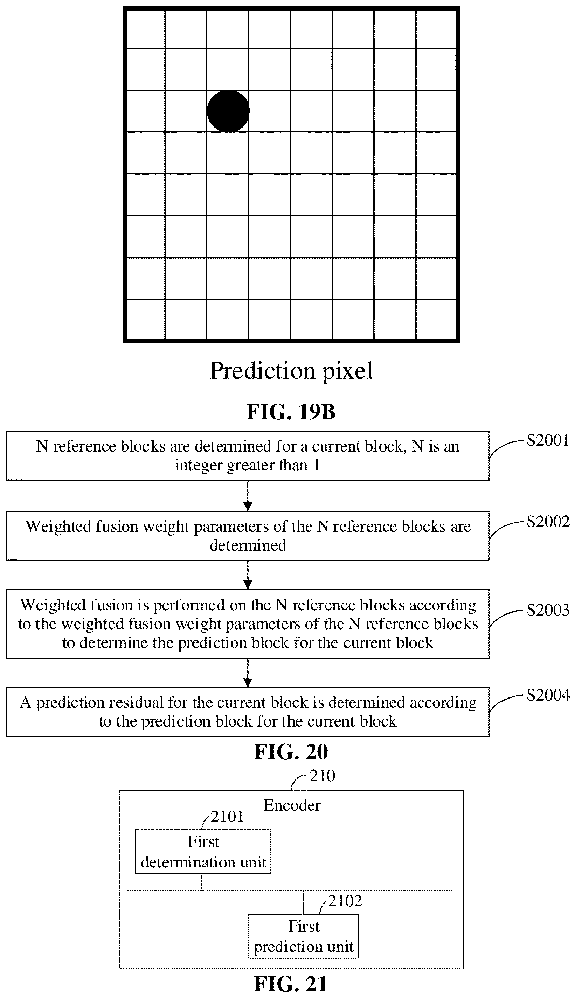

Assuming that the number of filter taps nTap is 5, the shape of the filter (or referred to as "filter template") is shown in FIG. 19A. $C_0$ to $C_4$ are the tap coefficients of the filter, respectively. The tap coefficient $C_0$ corresponds to the grid filled circle, which is the reconstructed pixel at the corresponding position in the reference block for the pixel to be predicted. The remaining white-filled circles are reconstructed pixels in the reference block spatially adjacent to the current position. Thus, according to the filter of FIG. 19A, the finally obtained filtered pixel is shown as black-filled circle in FIG. 19B.

In some embodiments, the method further includes following operation. A first parameter sample and a weighted fusion parameter of the first parameter sample are determined.

The operation that weighted fusion is performed on the N reference blocks according to the weighted fusion weight parameters of the N reference blocks to determine the prediction block for the current block includes followings. Weighted fusion is performed on the N reference blocks and the first parameter sample according to the weighted fusion weight parameters of the N reference blocks and a weighted fusion value of the first parameter sample to determine the prediction block for the current block.

In some embodiments, the first parameter sample includes the first sample. The operation that the first parameter sample is determined includes followings. The first sample is determined according to the first reference block in the N reference blocks.

In some embodiments, the first sample is determined according to the first reference block in the N reference blocks includes followings. A pixel reference value of the first sample is determined by rounding a square value of a pixel reference value of the first reference block.

In some embodiments, the first parameter sample includes a second sample. The operation that the first parameter sample is determined includes followings. The second sample is determined according to the picture pixel range. Exemplarily, the median value according to the picture pixel range is used as the second sample. It is to be noted that in the process of deriving the weighted fusion weight parameter and the process of applying the weighted fusion weight parameter, if the second sample is included, the values of the second samples in the derivation process and the application process may be the same or different.

At S1604, a reconstructed block for the current block is determined according to the prediction block for the current block.

In some embodiments, the method further includes following operations. The bitstream is decoded to determine a prediction residual for the current block. The reconstructed block for the current block is determined according to the prediction block and the prediction residual for the current block.

In some embodiments, the template matching criterion may also be SAD, and the calculation formula is as follows:

$$\text{SAD}(refT) = \sum_{m=0}^{M-1} |refT_m - curT_m|$$

SAD (refT) is the sum of absolute difference of the current template curT and the searched reference template. The screening criterion based on SAD is that: the BVs corresponding to the first N matching templates with the lowest SAD costs are compared and recorded.

Specifically, for N reference templates, the SAD between the n-th reference template and the template of the current block is as follows:

$$\text{SAD}(refT_n) = \sum_{m=0}^{M-1} \left| refT_{n,m} - curT_m \right|$$

where SAD($refT_n$) is the sum of absolute difference of the template of the current block and the n-th reference template.

In some embodiments, the template matching criterion may also be an NCC normalized correlation coefficient, and the calculation formula is as follows:

$$\text{R}(refT) = \frac{\sum_{m=0}^{M-1} \left| refT_m - refT_{Avg} \right| * \left| curT_m - curT_{Avg} \right|}{\sqrt{\sum_{m=0}^{M-1} (refT_m - refT_{Avg})^2} * \sqrt{\sum_{m=0}^{M-1} (curT_m - curT_{Avg})^2}}$$

where refT is the matching template in the search process, curT is the template of the current block, M is the number of pixels of the template of the current block, $refT_{Avg}$ is the average of pixels of the searched reference template, $curT_{Avg}$ is the pixel average of the template of the current block, R($refT$) is the correlation coefficient between the template of the current block and the searched reference template.

The NCC comparison criterion is that: block vectors BV corresponding to N reference templates with larger correlation coefficients R are sorted and recorded.

Specifically, for N reference templates, the correlation coefficient between the n-th reference template and the template of the current block is as follows:

$$R(refT_n) = \frac{\sum_{m=0}^{M-1}\left|refT_{n,m} - refT_{n_{Avg}}\right| * \left|curT_m - curT_{Avg}\right|}{\sqrt{\sum_{m=0}^{M-1}(refT_{n,m} - refT_{n_{Avg}})^2} * \sqrt{\sum_{m=0}^{M-1}(curT_m - curT_{Avg})^2}}$$

where $refT_{n_{Avg}}$ is the pixel average of the n-th candidate template, R($refT_n$) is the correlation coefficient between the template of the current coding block and the n-th candidate template. It is to be noted that the range of NCC normalized correlation coefficient R is [-1, 1], and the larger R, the stronger the correlation. It is to be noted that the template matching criteria used in the embodiments of the present dislcosure may also use any other template matching criteria in the related art, which will not be elaborated herein.

In some embodiments, the operation that the N reference blocks for the current block are determined further includes followings. A reference block for the current block is determined according to an intra prediction mode other than block matching. That is, part of the N reference blocks are determined according to the block vector, part of the N reference blocks are determined according to one or more other intra prediction modes, and the obtained plurality of reference blocks are fused to determine the prediction block for the current block. It is to be noted that the fusion manner provided by the embodiment of the present disclosure may also be implemented in conjunction with various sub-modes in IBC, which includes but not limited to ordinary IBC merge, IBC TM merge, MBVD, IBC CIIP, IBC ABVP, etc.

By using the above technical solution, in the process of searching in the reconstructed region, the reconstructed block information of different matching templates is fully utilized, instead of simply considering the reconstructed block information corresponding to the template with the smallest matching cost, thereby improving the prediction accuracy and the coding efficiency. Furthermore, the matching template information is fully utilized to adaptively allocate weight values to the reference blocks, and the different importance of different reconstructed block information to the prediction for the current block is considered, so as to further improve the prediction accuracy and coding efficiency.

In another embodiment of the present disclosure, referring to FIG. 20, FIG. 20 illustrates a flow schematic diagram of an encoding method provided by the embodiment of the present disclosure. As illustrated in FIG. 20, the method may include steps S2001 to S2004.

At S2001, N reference blocks are determined for a current block, N is an integer greater than 1.

In some embodiments, the operation that the N reference blocks are determined for the current block includes followings. A first block vector for the current block is determined according to a block matching criterion. A reference block for the current block is determined according to the first block vector for the current block. In some embodiments, the position pointed by the first block vector is searched to determine an optimal block vector, and a reference block pointed by the optimal block vector is determined. In some embodiments, the position pointed by the first block vector is searched to determine at least two block vectors, and at least two reference blocks pointed by the at least two block vectors are determined.

In some embodiments, the operation that the N reference blocks are determined for the current block includes followings. N block vectors for the current block are determined according to the block matching criterion. N reference blocks for the current block are determined according to the N block vectors for the current block.

In some embodiments, the operation that the N reference blocks are determined for the current block includes followings. The list of block vector candidates for the current block is constructed. The block vector for the current block is determined according to the list of block vector candidates. A reference block for the current block is determined according to the block vector for the current block. In practical applications, the list of block vector candidates is a BV candidate list determined based on the block matching criteria, such as IBC merge, IBC TM merge, IBC ABVP list, etc.

In some embodiments, the operation that the list of block vector candidates for the current block is constructed includes followings. A first list of block vector candidates for the current block is constructed based on the block matching criteria. Here, the first list of block vector candidates may be an IBC merge or an IBC ABVP list. The basic establishment process of the IBC ABVP list is same as that of the IBC merge, but the maximum numbers of candidates for the two lists are different (for example, the length of the list of IBC merge candidates is defined as 6, and the length of the list of IBC ABVP candidates is defined as 2).

Further, the operation that the block vector for the current block is determined according to the list of block vector candidates includes followings. The template matching parameters corresponding to at least part of block vectors in the first list of block vector candidates are determined based on a template matching criterion. At least part of the block vectors are sorted according to the template matching parameters to determine the sorted list of block vector candidates. The block vector for the current block is determined according to the sorted list of block vector candidates.

In some embodiments, after determining the value N of the number of candidate BVs, N block vectors (BVs) that are more matched need to be selected with a certain comparison criteria. For example, for the IBC merge list, the block vector BVn is determined. That is, after obtaining the matching templates according to the template offsets pXn and pYn, the template matching costs are calculated, and the BVs corresponding to N matching templates with smaller costs are recorded. The N matching templates are also referred to as reference templates. The template matching criterion may be one of SAD, SATD, MSE, MAD, RDO, correlation coefficient, PSNR or other cost functions used to measure the mode.

For example, the template matching criterion is Mean Absolute Difference (MAD), and the calculation formula is as follows:

$$\text{MAD}(refT) = \frac{1}{M} \sum_{m=0}^{M-1} |refT_m - curT_m|$$

where refT is the matching template in the list of BV candidates, curT is the template of the current block, M is the number of pixels of the template of the current coding block, and MAD (refT) is the mean absolute difference of the template of the current coding block curT and the matching templates corresponding to the BV candidates.

The screening criterion based on MAD is that: the BVs corresponding to N matching templates with the lowest MAD costs are compared and recorded.

Specifically, for N candidate templates, the MAD between the n-th candidate template and the template of the current coding block is as follows:

$$\text{MAD}(refT_n) = \frac{1}{M} \sum_{m=0}^{M-1} |refT_{n,m} - curT_m|$$

where refTn is the n-th candidate template, MAD (refTn) is the mean absolute difference between the template of the current block curT and the n-th candidate template, n = 0, ..., N-1.

In some embodiments, the operation that the list of block vector candidates for the current block is constructed includes followings. The first list of block vector candidates for the current block is constructed based on a block matching criterion. Based on the template matching criterion, a search range pointed by at least part of the block vectors in the first list of block vector candidates is searched to determine a second list of block vector candidates. Here, the first list of block vector candidates may be an IBC merge or an IBC ABVP list. The basic establishment process of the IBC ABVP list is same as that of the IBC merge, but the maximum numbers of candidates for the two lists are different (for example, the length of the list of IBC merge candidates is defined as 6, and the length of the list of IBC ABVP candidates is defined as 2). The second list of block vector candidates may be IBC TMmerge. In IBC TM merge mode, after obtaining bvL according to IBC merge, TM may also be used to locally refine the BV. The specific operation is to search in a small range centered on the obtained bvL, and select one or more optimal BVs in this range as the final BVs based on the template matching parameters.

In some other embodiments, the operation that the block vector for the current block is determined according to the list of block vector candidates includes followings. N block vectors for the current block are determined according to the list of block vector candidates. Exemplarily, the list of block vector candidates includes at least N block vectors, the first N block vectors are determined in the block vector candidate list. N reference blocks pointed by the N block vectors are determined.

In some embodiments, the value of N is determined to be a preset value. In some embodiments, the value of N is determined according to the value of the first identification parameter of the current block. In some embodiments, the value of the first syntax element is determined according to the value of the first identification parameter. The first syntax element is encoded and signalling the obtained encoded bits in the bitstream. In some embodiments, the method further includes following operations. At least two candidate values of N are determined, the prediction blocks for the current block which correspond to the candidate values are determined according to the candidate values, and the value of the first identification parameter is determined according to the prediction blocks for the current block which correspond to the candidate values and the original block. Alternatively, at least two candidate values of N are determined, the prediction template samples corresponding to the candidate values are determined according to the candidate values, the template matching parameters of the prediction template samples and the template sample of the current block are determined based on the template matching criterion, and the value of the first identification parameter is determined according to the template matching parameter.

It is to be noted that N may be a constant preset by the encoding and decoding sides. For example, N is 2, or 3, or 4, or 5. N may also be within a certain value range. For example, N may be any integer within [2, 6]. The range of N may be preset, the value of N may be determined based on the template matching criterion, or the optimal value of N may be determined at the encoding side and transmitted to the decoding side in the form of a bitstream. The cost function used to measure the performance of the fusion mode may be one of SAD, SATD, MSE, MAD, RDO, etc.

N BVs are obtained, and a reference block RefBlockn is directly obtained in the current picture according to BVn. Herein the horizontal offset of BVn is pXn and the vertical offset of BVn is pYn, where n = 0, 1..., N-1.

The simple translation and copy are used to implement. The specific operation is: for x = 0... nTbW-1, y = 0... nTbH-1,

$$RefBlockn\ [x][y] = recSamples[x + pXn][y + pYn]$$

where recSamples represents the reconstructed pixel values of the current picture. After obtaining the N reference blocks RefBlock, it is further necessary to determine the weight parameters Wn of the N reference blocks for weighted fusion, and the weighted fusion is implemented by using the reference blocks RefBlock and the weight parameters Wn.

In some embodiments, the method further includes following operations. It is determined whether a fusion prediction mode is used for the current block according to a value of a second identification parameter of the current block.

In some embodiments, the method further includes following operations. The value of the second identification parameter of the current block is determined according to a value of the second syntax element. The second identification parameter of the current block is encoded. □lternatively, at least two candidate prediction modes are determined; the prediction template samples corresponding to the candidate prediction modes are determined according to the at least two candidate predictions; the template matching parameters of the prediction template samples and the template sample of the current block are determined based on the template matching criteria; the optimal prediction mode is determined according to the template matching parameters; and the value of the second identification parameter is determined according to the optimal prediction mode.

In some embodiments, the value of the second identification information is a first value, and it is determined that the fusion prediction mode is used for the current block. The value of the second identification information is a second value, and it is determined that the fusion prediction mode is not used for the current block.

In some embodiments, the method further includes that: when it is determined that the fusion prediction mode is used for the current block, the method of S1601 to S1604 is performed. In some embodiments, the method further includes following operations. In a case where the fusion prediction mode is not used for the current block, a first reference block for the current block is determined. The prediction block for the current block is and determined according to the first reference block. Exemplarily, the first block vector for the current block is determined, and the first reference block is determined according to the first block vector.

For example, an isFusion_Flag (which may be understood as the second identification parameter or the second syntax element) is set, and if the isFusion_Flag is 1, the two BVs with derived costs being the best based on the template matching criterion are used for weighted fusion at both the encoding side and the decoding side. If the isFusion_Flag is 0, the weighted fusion is not performed.

At S2002, the weighted fusion weight parameters of the N reference blocks are determined.

It is to be noted that before performing weighted fusion, the weighted fusion weight parameters Wn of N reference blocks (which may be represented as RefBlock) need to be determined. The weight parameter may be a predefined value, or may be a value adaptively calculated by using the template matching parameter, the block matching parameter, the pixel value, etc.

It is to be noted that the weight parameters of different reference blocks are same or different. In some embodiments, the operation that the weighted fusion weight parameters of the N reference blocks are determined includes followings. The weighted fusion weight parameters of the N reference blocks are determined to be a preset weight parameter.

In some embodiments, the operation that the weighted fusion weight parameters of the N reference blocks are determined includes followings. A template sample of the current block is determined, and the reference template samples of the N reference blocks are determined. The matching reference samples are determined according to the reference template samples of the N reference blocks. the weighted fusion weight parameters of reconstructed reference samples corresponding to the matching reference samples are determined according to the template sample of the current block and the matching reference samples. The matching reference samples include the N reference template samples, and the weighted fusion weight parameters of the reconstructed reference samples include the weighted fusion weight parameters of the N reference blocks.

Here, the matching reference samples are applied to the process of deriving weighted fusion weight parameters. The reconstructed reference samples are applied to the process of applying weighted fusion weight parameters. The set of weighted fusion weight parameters derived according to the matching reference samples are applied to weighted fusion for the reconstructed reference samples corresponding to the matching reference samples.

In some embodiments, the operation that the matching reference samples are determined according to the reference template samples of the N reference blocks includes followings. A first parameter sample is determined. The matching reference samples are determined according to the reference template samples of the N reference blocks and the first parameter sample. The weighted fusion weight parameters of the reconstructed reference samples further include a weighted fusion weight parameter of the first parameter sample.

In some embodiments, the first parameter sample includes the first sample. The operation that the first parameter sample is determined includes followings. The first sample is determined according to a first template sample in the reference template samples of the N reference blocks.

In some embodiments, the first sample is determined according to the first template sample in the reference template samples of the N reference blocks includes followings. A pixel reference value of the first sample is determined by rounding a square value of a pixel reference value of the first template sample.

In some embodiments, the method further includes following operations. The template matching parameters of a template sample of the current block and the reference template samples are determined based on a template matching criterion. A template sample corresponding to a best template matching parameter is determined as the first template sample.

In some embodiments, the first parameter sample includes a second sample. The operation that the first parameter sample is determined includes followings. The second sample is determined according to the picture pixel range.

In some embodiments, the operation that the weighted fusion weight parameters of reconstructed reference samples corresponding to the matching reference samples are determined according to the template sample of the current block and the matching reference samples includes followings. The template matching parameters are determined according to the template sample of the current block and the matching reference samples. Weight parameter derivation is performed according to the template matching parameters to determine the weighted fusion weight parameters of the reconstructed reference samples.

In some embodiments, the operation that the weighted fusion weight parameters of reconstructed reference samples corresponding to the matching reference samples are determined according to the template sample of the current block and the matching reference samples includes followings. An autocorrelation parameter is determined according to pixel reference values of samples in the matching reference samples. A cross-correlation parameter is determined according to a pixel reference value of the template sample of the current block and the pixel reference values of the samples in the matching reference samples. The weighted fusion weight values of candidate reconstructed samples corresponding to the matching reference samples are determined according to the autocorrelation parameter and the cross-correlation parameter.

In some embodiments, the operation that the weighted fusion weight parameters of the N reference blocks are determined includes followings. The weighted fusion weight parameters of the N reference blocks are determined to be a preset weight parameter.

In some embodiments, the operation that the weighted fusion weight parameters of the N reference blocks are determined includes followings. A template sample of the current block is determined, and the reference template samples of the N reference blocks are determined. The template matching parameters of the template sample of the current block and the reference template samples are determined based on a template matching criterion. The weighted fusion weight parameters of the N reference blocks are determined according to a weight model preset for the template matching parameters.

In some embodiments, the weight model is configured to: obtain first intermediate values according to the template matching parameters and a first offset value; determine an accumulated sum of N first intermediate values; and determine the weighted fusion weight values of the N reference blocks according to ratios of the first intermediate values to the accumulated sum of the N first intermediate values.

In some embodiments, the weighting model is configured to: determine an accumulated sum of template matching parameters of the N reference template samples; and determine the weighted fusion weight values of the N reference blocks according to ratios of the template matching parameters to the accumulated sum of the template matching parameters.

In some embodiments, the weighting model is configured to: use the template matching parameters of the N reference template samples as input value of a Softmax function to determine the weighted fusion weight values of the N reference blocks.

In some embodiments, the method further includes determining a control parameter of the weight model according to a size of the current block.

**In** some embodiments, the method further includes determining a control parameter of the weight model according to a template type of the current block.

**In** some embodiments, the operation that the weighted fusion weight parameters of the N reference blocks are determined includes: determining the weighted fusion weight parameters of the N reference blocks to be 1/N.

At S2003, weighted fusion is performed on the N reference blocks according to the weighted fusion weight parameters of the N reference blocks to determine the prediction block for the current block.

Weighted fusion is performed according to the reference blocks and the corresponding weighted fusion weight parameters thereof to obtain the prediction block. Specifically, the pixel reference value of each reference block and the corresponding weight parameter thereof are multiplied and accumulated to obtain the current prediction value. The calculation formula is as follows.

For x = 0...nTbW-1, y = 0...nTbH-1, the calculation for the prediction value is as follows:

$$\text{predSamples}_{x,y} = \sum_{p=0}^{P-1} w_{p,x,y} * RefBlock_{p,x,y}$$

Each prediction value predSamples$_{x,y}$ is spatially stored to be the output prediction block of IBC Fusion.

It is to be noted that the present disclosure proposes an improved process of determining the block vector BV for the IBC and generating the prediction value. Specifically, IBC Fusion technology is proposed. As shown in FIG. 18, N reference blocks are determined according to BVn, N reference blocks are fused according to corresponding weighted fusion parameters Wn to obtain the prediction block for the current block, such that it makes full use of the information of the reconstructed blocks of different matching templates, thereby improving prediction accuracy and coding efficiency.

Further, in some embodiments, before performing weighted fusion on the N reference blocks, the method further includes following operations. Correction or picture enhancement is performed on the N reference blocks to determine the processed N reference blocks. Exemplarily, the N reference blocks are filtered to determine N filtered reference blocks. The filtering manner may be traditional filtering methods such as bilateral filtering, mean filtering, etc., it may also be filtering enhancement based on neural network. The correction manner may also use the matching template information to correct the matching reconstructed block.

In some embodiments, the method further includes following operations. A template sample of the current block is determined. The matching reference samples are determined according to N reference template samples. A coefficient of a target filter is determined according to the template sample of the current block and the matching reference samples.

In some embodiments, the operation that the coefficient of the target filter is determined according to the template sample of the current block and the matching reference samples includes followings. The template matching parameters are determined according to the template sample of the current block and the matching reference samples. Weight parameter derivation is performed according to the template matching parameters to determine the coefficient of the target filter.

In some embodiments, the operation that the weighted fusion weight parameters of reconstructed reference samples corresponding to the matching reference samples are determined according to the template sample of the current block and the matching reference samples includes followings. An autocorrelation parameter is determined according to pixel reference values of samples in the matching reference samples. A cross-correlation parameter is determined according to a pixel reference value of the template sample of the current block and the pixel reference values of the samples in the matching reference samples. The coefficient of the target filter is determined according to the autocorrelation parameter and the cross-correlation parameter.

In some embodiments, the matching reference samples further includes a second parameter sample. Exemplarily, the second parameter sample may be an offset value Bias, and the offset value Bias in the process of deriving the coefficient of the filter may be any one constant within the picture pixel range [0, (1<<bitDepth)-1]. Exemplarily, Bias is set to be 1<<(bitDepth-1).

At S2004, a prediction residual for the current block is determined according to the prediction block for the current block.

In some embodiments, the method further includes following operation. The prediction residual for the current block is encoded and the obtained encoded bits are signalled in the bitstream.

By using the above technical solution, in the process of searching in the reconstructed region, the reconstructed block information of different matching templates is fully utilized, instead of simply considering the reconstructed block information corresponding to the template with the smallest matching cost, thereby improving the prediction accuracy and the coding efficiency. Furthermore, the matching template information is fully utilized to adaptively allocate weight values to the reference blocks, and the different importance of different reconstructed block information to the prediction for the current block is considered, so as to further improve the prediction accuracy and coding efficiency.

In another embodiment of the present disclosure, on the basis of the same inventive concept of the foregoing embodiments, referring to FIG. 21, FIG. 21 illustrates a schematic diagram of the compositional structure of an encoder according to an embodiment of the present disclosure. As illustrated in FIG. 21, the encoder 210 may include: a first determination unit 2101 and a first prediction unit 2102.

The first determination unit 2101 is configured to determine N reference blocks for a current block, N is an integer greater than 1.

The first determination unit 2101 is configured to determine weighted fusion weight parameters of the N reference blocks.

The first prediction unit 2102 is configured to perform weighted fusion on the N reference blocks according to the weighted fusion weight parameters of the N reference blocks to determine a prediction block for the current block.

The first determination unit 2101 is configured to determine a prediction residual for the current block according to the prediction block for the current block.

It is to be understood that the functional units of the encoder also perform the encoding method described in any one of the foregoing embodiments, which will not be elaborated herein.

It is to be understood that in the embodiments of the present disclosure, the "unit" may be a part of a circuit, part of a processor, part of programs or softwares, etc., of course, it may also be modular or non-modular. Further, in the embodiments, various functional units may be integrated in one processing unit, or each unit may exist physically alone, or two or more units may be integrated in one unit. The above-mentioned integrated unit may be implemented either in the form of hardware or in the form of software function module.

When the integrated unit is implemented in the form of a software function module and does not be sold or used as an independent product, it may also be stored in a computer-readable storage medium. Based on such understanding, the technical solution of the present embodiments in essence or the part contributing to the related art or all or part of the technical solution may be embodied in the form of software product, and the software product is stored in a storage medium and includes several instructions for enabling a computer device (which can be a personal computer, a server, a network device, etc.) or processor to perform all or part of the steps of the method of the present embodiments. The aforementioned storage media include: U disk, mobile hard disk, read-only memory (ROM), random access memory (RAM), disk or optical disk and other media that can store program code.

Therefore, the embodiments of the present disclosure provide a computer readable storage medium, applied to the encoder 210. The computer readable storage medium stores the computer program which, when implemented by the first processor, implement the encoding method of any one of the preceding embodiments.

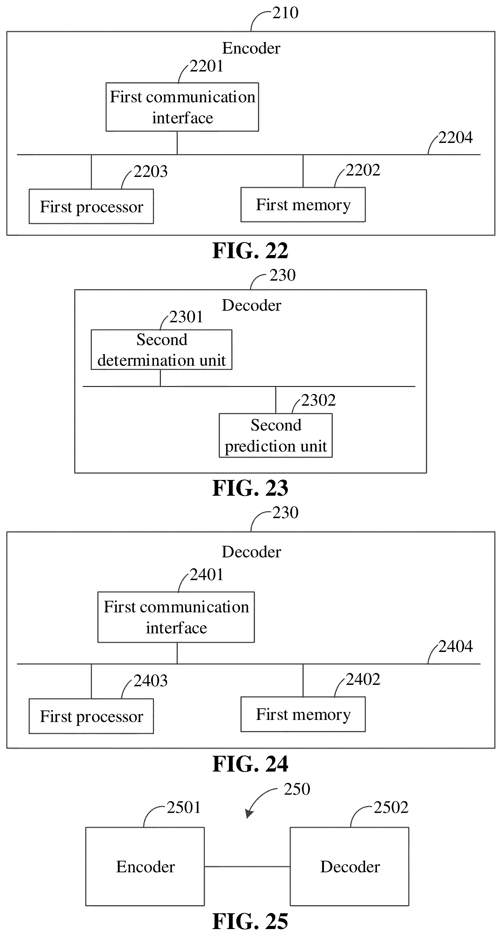

Based on the composition of the encoder 210 and the computer readable storage medium, referring to FIG. 22, FIG. 22 illustrates a structural schematic diagram of a specific hardware of an encoder 210 provided by an embodiment of the present disclosure. As illustrated in FIG. 22, the encoder 210 may include: a first communication interface 2201, a first memory 2202 and a first processor 2203. The components are coupled together via a first bus system 2204. It is to be understood that the first bus system 2204 is used to implement the connection communication between these components. In addition to a data bus, the first bus system 2204 further includes a power bus, a control bus and a status signal bus. However, the various buses are marked as the first bus system 2204 in FIG. 22 for clarity.

The first communication interface 2201 is configured to receive and transmit the signal in the process of transmitting and receiving information with other external network elements.

The first memory 2202 is configured to store a computer program capable of running on the first processor 2103.

The first processor 2203 is configured to, when running the computer program:

determine N reference blocks for a current block, N is an integer greater than 1;
determine weighted fusion weight parameters of the N reference blocks;
perform weighted fusion on the N reference blocks according to the weighted fusion weight parameters of the N reference blocks to determine a prediction block for the current block; and
determine a prediction residual for the current block according to the prediction block for the current block.

It is to be understood that the first memory 2202 in the embodiments of the present disclosure may be volatile memory or non-volatile memory, or may include both volatile and non-volatile memory. The nonvolatile memory can be read-only memory (ROM), programmable ROM (PROM), erasable Prom (EPROM), electrically erasable EPROM (EEPROM) or flash memory. Volatile memory can be random access memory (RAM), which is used as an external cache. By way of examplary illustration, but not limitation, many forms of RAM are available, such as static RAM (SRAM), dynamic RAM (DRAM), synchronous DRAM (SDRAM), double data rate SDRAM (DDRSDRAM, enhanced SDRAM (ESDRAM), synchlink DRAM (SLDRAM) and direct Rambus RAM (DR RAM). The first memory 2202 of the systems and methods described herein is intended to include, but is not limited to, these and any other suitable types of memory.

The first processor 2203 may be an integrated circuit chip, which has signal processing capability. During the implementation, the various steps of the above method may be implemented by the integrated logic circuit of hardware in the first processor 2203 or instructions in the form of software. The above first processor 2203 may be general purpose processors, digital signal processors (DSPs), application specific integrated circuits (ASICs), field programmable gate arrays (FPGAs) or other programmable logic devices, discrete gate or transistor logic devices, and discrete hardware components. The disclosed methods, steps and logic block diagrams in the embodiments of the present disclosure can be implemented or executed. The general-purpose processor may be a microprocessor or the processor may be any conventional processor or the like. The steps of the method disclosed in connection with the embodiment of the present disclosure can be directly embodied in the execution completion of the hardware decoding processor, or by the combination of the hardware and software modules in the decoding processor. The software module can be located in random memory, flash memory, read-only memory, programmable read-only memory or electrically erasable programmable memory, register and other mature storage media in the art. The storage medium is located in the first memory 2202, and the first processor 2203 reads the information in the first memory 2202 and completes the steps of the above method in combination with its hardware.

It is to be understood that the embodiments described herein may be implemented in hardware, software, firmware, middleware, microcode or a combination thereof. For the hardware implementation, the processing unit may be implemented in one or more Application Specific Integrated Circuits (ASIC), Digital Signal Processors (DSPD), Digital Signal Processing Devices (DSPD), Programmable Logic Devices (PLD), Field-Programmable Gate Arrays (FPGA), general purpose processors, controllers, microcontrollers, microprocessors, other electronic units for performing the functions described herein, or a combination thereof. For the software implementation, the techniques described herein may be implemented by modules (e.g. procedures, functions, etc.) that perform the functions described herein. The software code may be stored in the memory and executed by a processor. The memory may be implemented in the processor or outside the processor.

Alternatively, as another embodiment, the first processor 2203 is further configured to, when running the computer program, perform the encoding method of any of the preceding embodiments.

An embodiment of the present disclosure provides an encoder. For the encoder, in the process of searching in the reconstructed region, the reconstructed block information of different matching templates is fully utilized, instead of simply considering the reconstructed block information corresponding to the template with the smallest matching cost, thereby improving the prediction accuracy and the coding efficiency. Furthermore, the matching template information is fully utilized to adaptively allocate weight values to the reference blocks, and the different importance of different reconstructed block information to the prediction for the current block is considered, so as to further improve the prediction accuracy and coding efficiency.

In another embodiment of the present disclosure, on the basis of the same inventive concept of the foregoing embodiments, referring to FIG. 23, FIG. 23 illustrates a schematic diagram of the compositional structure of a decoder 230 according to an embodiment of the present disclosure. As illustrated in FIG. 23, the decoder 230 may include: a second determination unit 2301 and a second prediction unit 2302.

The second determination unit 2301 is configured to determine N reference blocks for a current block, N is an integer greater than 1.

The second determination unit 2301 is further configured to determine weighted fusion weight parameters of the N reference blocks.

The second prediction unit 2302 is configured to perform weighted fusion on the N reference blocks according to the weighted fusion weight parameters of the N reference blocks to determine a prediction block for the current block.

The second determination unit 2301 is further configured to determine a reconstructed block for the current block according to the prediction block for the current block.

It is to be understood that the functional units of the decoder also perform the decoding method described in any one of the foregoing embodiments, which will not be elaborated herein.

It is to be understood that in the embodiments, the "unit" may be a part of a circuit, part of a processor, part of programs or softwares, etc., of course, it may also be modular or non-modular. Further, in the embodiments, various functional units may be integrated in one processing unit, or each unit may exist physically alone, or two or more units may be integrated in one unit. The above-mentioned integrated unit may be implemented either in the form of hardware or in the form of software function module.

When the integrated unit is implemented in the form of a software function module and does not be sold or used as an independent product, it may also be stored in a computer-readable storage medium. Based on such understanding, the embodiments of the present disclosure provide a computer readable storage medium, applied to the decoder 230. The computer readable storage medium stores the computer program which, when implemented by the second processor, implement the decoding method of any one of the preceding embodiments.

Based on the composition of the decoder 230 and the computer readable storage medium, referring to FIG. 24, FIG. 24 illustrates a structural schematic diagram of a specific hardware of a decoder 230 provided by an embodiment of the present disclosure. As illustrated in FIG. 24, the decoder 230 may include a second communication interface 2401, a second memory 2402 and a second processor 2403. These components are coupled together via a second bus system 2404. It is to be understood that the second bus system 2404 is used to implement the connection communication between these components. In addition to a data bus, the second bus system 2404 further includes a power bus, a control bus and a status signal bus. However, the various buses are marked as the second bus system 2404 in FIG. 24 for clarity.

The second communication interface 2401 is configured to receive and transmit the signal in the process of transmitting and receiving information with other external network elements.

The second memory 2402 is configured to store a computer program capable of running on the second processor 2403.

The second processor 2403 is configured to, when running the computer program:

determine N reference blocks for a current block, N is an integer greater than 1;
determine weighted fusion weight parameters of the N reference blocks;
perform weighted fusion on the N reference blocks according to the weighted fusion weight parameters of the N reference blocks to determine a prediction block for the current block; and
determine a reconstructed block for the current block according to the prediction block for the current block.

Alternatively, as another embodiment, the second processor 2403 is further configured to, when running the computer program, perform the decoding method of any of the preceding embodiments.

It is to be understood that the second memory 2402 is similar in hardware function to the first memory 2202, and the second processor 2403 is similar in hardware function to the first processor 2203, and will not be elaborated here.

An embodiment of the present disclosure provides a decoder. For the decoder, in the process of searching in the reconstructed region, the reconstructed block information of different matching templates is fully utilized, instead of simply considering the reconstructed block information corresponding to the template with the smallest matching cost, thereby improving the prediction accuracy and the decoding efficiency. Furthermore, the matching template information is fully utilized to adaptively allocate weight values to the reference blocks, and the different importance of different reconstructed block information to the prediction for the current block is considered, so as to further improve the prediction accuracy and decoding efficiency.

In another embodiment of the present disclosure, referring to FIG. 25, FIG. 25 illustrates a schematic diagram of a composition structure of an encoding and decoding system according to an embodiment of the present disclosure. As illustrated in FIG. 25, the encoding and decoding system 250 may include an encoder 2501 and a decoder 2502.

In the embodiments of the present disclosure, the encoder 2501 may be an encoder described in any one of the aforementioned embodiments, and the decoder 2502 may be a decoder described in any one of the aforementioned embodiments.

It is to be noted that the terms used herein "including", "comprising" or any other variation thereof are intended to encompass non-exclusive inclusion, so that a process, a method, an article or a device that includes a set of elements includes not only those elements but also other elements that are not explicitly listed, or also elements inherent to such a process, method, article or device. In the absence of further limitations, an element defined by the phrase "includes an ..." does not exclude the existence of another identical element in the process, method, article or device in which the elements are included.

The above serial numbers of the embodiments of the present disclosure are for description only and do not represent the advantages and disadvantages of the embodiments.

The features disclosed in several embodiments of the product provided in the disclosure can be arbitrarily combined as long as there is no conflict therebetween to obtain a new embodiment of a product.

The features disclosed in several embodiments of the product provided in the disclosure can be arbitrarily combined as long as there is no conflict therebetween to obtain a new embodiment of a product.

The features disclosed in several embodiments of methods or devices provided in the disclosure can be arbitrarily combined as long as there is no conflict therebetween to obtain a new embodiment of a method or a device.

The descriptions above are only the specific embodiments of the present disclosure, and is not intended to limit the scope of protection of the embodiments of the present disclosure. Any change and replacement are easily to think within the technical scope of the embodiments of the present by those skilled in the art, and fall with the protection scope of the present disclosure. Therefore, the scope of protection of the embodiments of the present disclosure shall be subject to the scope of protection of the claims.

Industrial practicality

In the embodiments of the present disclosure, a list of block vector candidates for the current block is constructed. N block vectors are determined according to the list of block vector candidates. Herein N is an integer greater than 1. The N reference blocks are determined according to the N block vectors. Weighted fusion is performed on the N reference blocks to determine a prediction block for the current block. A prediction residual or a reconstructed block for the current block is determined according to the prediction block for the current block. In this way, in the process of searching in the reconstructed region, the reconstructed block information of different matching templates is fully utilized, instead of simply considering the reconstructed block information corresponding to the template with the smallest matching cost, thereby improving the prediction accuracy and the coding efficiency. Furthermore, the matching template information is fully utilized to adaptively allocate weight values to the reference blocks, and the different importance of different reconstructed block information to the prediction for the current block is considered, so as to further improve the prediction accuracy and coding efficiency.

**Claims**

1. A method for decoding, applied to a decoder, comprising:

   determining N reference blocks for a current block, N being an integer greater than 1;
   determining weighted fusion weight parameters of the N reference blocks;
   performing weighted fusion on the N reference blocks according to the weighted fusion weight parameters of the N reference blocks to determine a prediction block for the current block; and
   determining a reconstructed block for the current block according to the prediction block for the current block.

2. The method of claim 1, wherein determining the N reference blocks for the current block comprises:

   constructing a list of block vector candidates for the current block;
   determining a block vector for the current block according to the list of block vector candidates; and
   determining a reference block for the current block according to the block vector for the current block.

3. The method of claim 2, wherein constructing the list of block vector candidates for the current block comprises:
   constructing a first list of block vector candidates for the current block based on a block matching criterion.

4. The method of claim 3, wherein determining the block vector for the current block according to the list of block vector candidates comprises:

   determining template matching parameters corresponding to at least part of block vectors in the first list of block vector candidates based on a template matching criteria;
   sorting the at least part of block vectors according to the template matching parameters, and determining a sorted list of block vector candidates; and
   determining the block vector for the current block according to the sorted list of block vector candidates.

5. The method of claim 2, wherein constructing the list of block vector candidates for the current block comprises:

   constructing a first list of block vector candidates for the current block based on a block matching criterion; and
   determining, based on a template matching criterion, a second list of block vector candidates according to a search range pointed by at least part of block vectors in the first list of block vector candidates.

6. The method of any one of claims 2 to 5, wherein determining the block vector for the current block according to the list of block vector candidates comprises:
   determining N block vectors for the current block according to the list of block vector candidates.

7. The method of any one of claims 1 to 6, further comprising: determining a value of N to be a preset value.

8. The method of any one of claims 1 to 6, further comprising: determining a value of N according to a value of a first identification parameter of the current block.

9. The method of claim 8, further comprising:

   decoding a first syntax element of the current block, and determining the value of the first identification parameter according to a value of the first syntax element; or

determining at least two candidate values of N; determining prediction template samples corresponding to the candidate values according to the candidate values; determining template matching parameters of the prediction template samples and a template sample of the current block based on a template matching criteria; and determining the value of the first identification parameter according to the template matching parameters.

10. The method of any one of claims 1 to 9, further comprising: determining whether a fusion prediction mode is used for the current block according to a value of a second identification parameter of the current block.

11. The method of claim 10, further comprising:

decoding a second syntax element of the current block; and
determining the value of the second identification parameter of the current block according to a value of the second syntax element.

12. A method for encoding, applied to an encoder, comprising:

determining N reference blocks for a current block, N being an integer greater than 1;
determining weighted fusion weight parameters of the N reference blocks;
performing weighted fusion on the N reference blocks according to the weighted fusion weight parameters of the N reference blocks to determine a prediction block for the current block; and
determining a prediction residual for the current block according to the prediction block for the current block.

13. A bitstream, wherein the bitstream is generated by performing bit encoding according to information to be encoded, and the information to be encoded includes at least one of:
a number of coefficients of a target filter, a shape of the target filter, a value of a first syntax element or a value of a second syntax element; wherein the first syntax element is used for indicating a value of N, and the second syntax element is used for indicating whether a fusion prediction mode is used for a current block.

14. An encoder, comprising: a first determination unit and a first prediction unit; wherein

the first determination unit is configured to determine N reference blocks for a current block, N being an integer greater than 1;
the first determination unit is configured to determine weighted fusion weight parameters of the N reference blocks;
the first prediction unit is configured to perform weighted fusion on the N reference blocks according to the weighted fusion weight parameters of the N reference blocks to determine a prediction block for the current block; and
the first determination unit is configured to determine a prediction residual for the current block according to the prediction block for the current block.

15. An encoder, comprising: a first memory and a first processor; wherein

the first memory is configured to store a computer program capable of running on the first processor; and
the first processor is configured to, when running the computer program, perform the method of claim 12.

16. A decoder, comprising: a second determination unit and a second prediction unit; wherein

the second determination unit is configured to determine N reference blocks for a current block, N being an integer greater than 1;
the second determination unit is further configured to determine weighted fusion weight parameters of the N reference blocks;
the second prediction unit is configured to perform weighted fusion on the N reference blocks according to the weighted fusion weight parameters of the N reference blocks to determine a prediction block for the current block; and
the second determination unit is further configured to determine a reconstructed block for the current block according to the prediction block for the current block.

17. A decoder, comprising: a second memory and a second processor; wherein

the second memory is configured to store a computer program capable of running on the second processor; and the second processor is configured to, when running the computer program, perform the method of any one of claims 1 to 11.

18. A computer-readable storage medium having stored thereon a computer program and a bitstream, wherein when the computer program is executed by a processor, the computer program implements the method of any one of claims 1 to 11 to decode the bitstream to generate a video or an image or implements the method of claim 12 to generate a bitstream.

**FIG. 1**

**FIG. 2**

(a)
refTemplateType=1

(b)
refTemplateType=2

(c)
refTemplateType=3

(d)
refTemplateType=4

(e)
refTemplateType=5

(f)
refTemplateType=6

**FIG. 3**

**FIG. 4**

IBC Buffer

X Candidate item

▨ Reconstructed region

⌐ ¬ Reference
  region

**FIG. 5**

Reference template (RT)

Template (T)

Reference block

Candidate BV of
IBC Merge

Current block

**FIG. 6**

**FIG. 7**

**FIG. 8A**

**FIG. 8B**

BVD

BVP

BV

Current PU

**FIG. 9**

X | Curr

（a）

X | Curr

（b）

X | X
X | Curr

（c）

X | X
X | X | Curr

（d）

**FIG. 10**

⋮

| | | m-2,n-2 | m-1,n-2 | m,n-2 | m+1,n-2 | | |
| m-2,n-1 | m-1,n-1 | m,n-1 | m+1,n-1 |
| m-2,n | m-1,n | m,n |

⋮

**FIG. 11**

**FIG. 12**

Best matching template

Reconstructed region

Refined BV

Reference block

Template

Current block

**FIG. 13**

Input video

Divided to coding blocks

Transform and quantization unit ~101

Quantized transform coefficient

Inverse transform and inverse quantization unit ~106

Intra estimation unit ~102

Filter control analysis unit ~107

Filter control data

Encoding unit ~109

Output bitstream

Inter/Intra selection 103~

Intra prediction unit

Filtering unit ~108

Motion compensation unit ~104

Intra prediction data

Montion data

Motion estimation unit ~105

Decoded image buffer unit ~110

Output video signal

100

**FIG. 14A**

EP 4 697 712 A1

FIG. 14B

FIG. 15

N reference blocks are determined for a current block, N is an integer greater than 1 ⟋ S1601

The weighted fusion weight parameters of the N reference blocks are determined ⟋ S1602

Weighted fusion is performed on the N reference blocks according to the weighted fusion weight parameters of the N reference blocks to determine the prediction block for the current block ⟋ S1603

A reconstructed block for the current block is determined according to the prediction block for the current block ⟋ S1604

**FIG. 16**

The value of N is determined ⟋ S1701

The template matching parameters corresponding to the block vectors are determined based on the template matching criterion ⟋ S1702

N block vectors are determined according to the template matching parameters ⟋ S1703

N reference blocks are determined according to the N block vectors ⟋ S1704

**FIG. 17**

**FIG. 18**

Reference block

**FIG. 19A**

Prediction pixel

**FIG. 19B**

| | |
|---|---|
| N reference blocks are determined for a current block, N is an integer greater than 1 | S2001 |

↓

| | |
|---|---|
| Weighted fusion weight parameters of the N reference blocks are determined | S2002 |

↓

| | |
|---|---|
| Weighted fusion is performed on the N reference blocks according to the weighted fusion weight parameters of the N reference blocks to determine the prediction block for the current block | S2003 |

↓

| | |
|---|---|
| A prediction residual for the current block is determined according to the prediction block for the current block | S2004 |

**FIG. 20**

210

Encoder

2101

First determination unit

2102

First prediction unit

**FIG. 21**

/210

Encoder

/2201

First communication
interface

/2204

/2203

First processor

/2202

First memory

**FIG. 22**

/230

Decoder

/2301

Second
determination unit

/2302

Second
prediction unit

**FIG. 23**

/230

Decoder

/2401

First communication
interface

/2404

/2403

First processor

/2402

First memory

**FIG. 24**

/250

/2501

Encoder

/2502

Decoder

**FIG. 25**

## INTERNATIONAL SEARCH REPORT

| International application No. |
|---|
| **PCT/CN2023/088538** |

| A. | CLASSIFICATION OF SUBJECT MATTER |
|---|---|

H04N19/176(2014.01)i

According to International Patent Classification (IPC) or to both national classification and IPC

| B. | FIELDS SEARCHED |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, DWPI, ENTXTC, VEN, VVC, HEVC: 多个, 参考块, 当前块, 融合, 帧内, 预测, 重构, 重建, 匹配, 块矢量, multiple, reference block, current block, fusion, intra, predict, reconstruct, match, block vector, BV

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113056919 A (SAMSUNG ELECTRONICS CO., LTD.) 29 June 2021 (2021-06-29) claims 1-15, and description, paragraphs 0048-0097 and 0243-0387 | 1, 7-13, 22, 29, 30, 38, 44, 45, 48-51, 60, 67, 68, 76-81 |
| A | CN 101766030 A (SAMSUNG ELECTRONICS CO., LTD.) 30 June 2010 (2010-06-30) entire document | 1-81 |
| A | CN 108353166 A (ELECTRONICS AND TELECOMMUNICATIONS RESEARCH INSTITUTE) 31 July 2018 (2018-07-31) entire document | 1-81 |
| A | CN 113610055 A (TSINGHUA SHENZHEN INTERNATIONAL GRADUATE SCHOOL) 05 November 2021 (2021-11-05) entire document | 1-81 |
| A | CN 114830651 A (GUANGDONG OPPO MOBILE COMMUNICATIONS CO., LTD.) 29 July 2022 (2022-07-29) entire document | 1-81 |
| A | CN 110099281 A (MEDIATEK INC.) 06 August 2019 (2019-08-06) entire document | 1-81 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 November 2023** | **01 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/088538**

### C. DOCUMENTS CONSIDERED TO BE RELEVANT

| Category* | Citation of document, with indication, where appropriate, of the relevant passages | Relevant to claim No. |
|---|---|---|
| A | KR 20230006396 A (HYUNDAI MOTOR CO., LTD.) 10 January 2023 (2023-01-10)<br>entire document | 1-81 |

Form PCT/ISA/210 (second sheet) (July 2022)

## INTERNATIONAL SEARCH REPORT
### Information on patent family members

International application No.

**PCT/CN2023/088538**

| Patent document cited in search report | | | Publication date (day/month/year) | Patent family member(s) | | | Publication date (day/month/year) |
|---|---|---|---|---|---|---|---|
| CN | 113056919 | A | 29 June 2021 | WO | 2020101429 | A1 | 22 May 2020 |
| | | | | US | 2023344991 | A1 | 26 October 2023 |
| | | | | KR | 20210029819 | A | 16 March 2021 |
| | | | | US | 2022014730 | A1 | 13 January 2022 |
| CN | 101766030 | A | 30 June 2010 | MY | 158765 | A | 15 November 2016 |
| | | | | KR | 20090012926 | A | 04 February 2009 |
| | | | | US | 2012236943 | A1 | 20 September 2012 |
| | | | | WO | 2009017301 | A1 | 05 February 2009 |
| | | | | US | 2009034854 | A1 | 05 February 2009 |
| | | | | JP | 2010535447 | A | 18 November 2010 |
| CN | 108353166 | A | 31 July 2018 | KR | 20170058866 | A | 29 May 2017 |
| | | | | US | 2018376137 | A1 | 27 December 2018 |
| | | | | KR | 20170058838 | A | 29 May 2017 |
| | | | | US | 2020267383 | A1 | 20 August 2020 |
| | | | | US | 2021266528 | A1 | 26 August 2021 |
| | | | | WO | 2017086738 | A1 | 26 May 2017 |
| CN | 113610055 | A | 05 November 2021 | | None | | |
| CN | 114830651 | A | 29 July 2022 | WO | 2022104498 | A1 | 27 May 2022 |
| CN | 110099281 | A | 06 August 2019 | KR | 20160148005 | A | 23 December 2016 |
| | | | | WO | 2015169200 | A1 | 12 November 2015 |
| | | | | JP | 2017518689 | A | 06 July 2017 |
| | | | | EP | 3130147 | A1 | 15 February 2017 |
| | | | | US | 2017054996 | A1 | 23 February 2017 |
| | | | | CN | 106464905 | A | 22 February 2017 |
| KR | 20230006396 | A | 10 January 2023 | WO | 2023277603 | A1 | 05 January 2023 |